(19) Europäisches Patentamt
European Patent Office
Office européen des brevets

(11) EP 4 310 556 A1

(12) # EUROPEAN PATENT APPLICATION
published in accordance with Art. 153(4) EPC

(43) Date of publication:
**24.01.2024 Bulletin 2024/04**

(21) Application number: **22771345.0**

(22) Date of filing: **14.03.2022**

(51) International Patent Classification (IPC):
***G02B 5/02*** *(2006.01)* ***G01J 1/04*** *(2006.01)*

(52) Cooperative Patent Classification (CPC):
**G01J 1/04; G02B 5/02**

(86) International application number:
**PCT/JP2022/011156**

(87) International publication number:
**WO 2022/196599 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021045338**

(71) Applicant: **FUJIFILM Corporation**
**Tokyo 106-8620 (JP)**

(72) Inventors:
- **NARA Yuki**
  **Haibara-gun, Shizuoka 421-0396 (JP)**
- **ARAYAMA Kyohei**
  **Haibara-gun, Shizuoka 421-0396 (JP)**

(74) Representative: **HGF**
**HGF Limited**
**1 City Walk**
**Leeds LS11 9DX (GB)**

(54) **FILM AND PHOTOSENSOR**

(57) Provided are a film including a phase A having a refractive index of 1.7 or more to light having a wavelength of 550 nm; and a phase B having a refractive index of 1.6 or less to light having a wavelength of 550 nm, in which the phase A and the phase B form a phase-separated structure in the film, and in a cross section of the film in a thickness direction, a total length of a distance in an interface between the phase A and the phase B per 1 $\mu$m $\times$ 1 $\mu$m is 2.90 to 5.00 $\mu$m; and an optical sensor including the film.

EP 4 310 556 A1

## Description

## BACKGROUND OF THE INVENTION

1. Field of the Invention

The present invention relates to a film having light scattering properties. The present invention also relates to an optical sensor.

2. Description of the Related Art

In recent years, studies on a light scattering film have been advanced. Patent Literature 1 discloses an invention of a light scattering sheet including a plurality of polymers having different refractive indexes from each other and including a light-scattering layer having a co-continuous phase structure in at least a part of a region, in which an incidence ray is isotropically transmitted and scattered, a scattering angle showing the maximal value of intensity of scattered light is 2° to 40°, and a total light transmittance is 70% to 100%.

CITATION LIST

Patent Literature

[Patent Literature 1] JP2016-161859A

## SUMMARY OF THE INVENTION

In recent years, there has been a demand for further improvement in performance regarding light scattering properties. For example, there is a demand for scattering and transmitting incidence ray over a wider angle. In addition, light having a long wavelength tends to be difficult to scatter, and the incidence ray may be transmitted as it is without being scattered in the film. Therefore, it is also required to have high light scattering properties with respect to light having a wide wavelength range.

Even in the invention disclosed in Patent Literature 1, there is room for further improvement in these performances.

Therefore, an object of the present invention is to provide a film which can scatter and transmit incidence ray over a wide range and has high light scattering properties with respect to light having a wide wavelength range. Another object of the present invention is to provide an optical sensor.

The present invention provides the following.

<1> A film comprising:

a phase A having a refractive index of 1.7 or more to light having a wavelength of 550 nm; and
a phase B having a refractive index of 1.6 or less to light having a wavelength of 550 nm,
in which the phase A and the phase B form a phase-separated structure in the film, and
in a cross section of the film in a thickness direction, a total length of a distance in an interface between the phase A and the phase B per 1 $\mu m \times 1$ $\mu m$ is 2.90 to 5.00 $\mu m$.

<2> The film according to <1>,
in which the phase-separated structure is a co-continuous phase structure or a sea-island structure.
<3> The film according to <1> or <2>,
in which at least one of the phase A or the phase B contains a resin.
<4> The film according to any one of <1> to <3>,
in which the phase A contains inorganic particles.
<5> The film according to <4>,
in which the inorganic particles include at least one selected from titanium oxide particles, strontium titanate particles, barium titanate particles, zinc oxide particles, magnesium oxide particles, zirconium oxide particles, aluminum oxide particles, aluminum hydroxide particles, barium sulfate particles, or zinc sulfide particles.
<6> The film according to <4> or <5>,
in which an average primary particle diameter of the inorganic particles is 130 nm or less.
<7> The film according to any one of <4> to <6>,

in which a surface of the inorganic particles contained in the phase A is surface-modified with a first resin, and the phase B contains a second resin different from the first resin and a cured substance derived from a polymerizable monomer.

<8> The film according to any one of <1> to <7>,
in which, in a case where light is incident on the film from a normal direction, an average transmittance of light in a wavelength range of 450 to 940 nm, transmitted in the normal direction, is 10% to 50%.
<9> The film according to any one of <1> to <8>,
in which, in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is 15% or less.
<10> The film according to any one of <1> to <9>,
in which, in a case where light is incident on the film from a normal direction, an intensity of light having a wavelength of 940 nm, which is transmitted through the film and is a transmitted light scattered in a direction of 10 degrees from the normal direction, is 90% or more of an intensity of a transmitted light in the normal direction, and an intensity of light having a wavelength of 940 nm, which is transmitted through the film and is a transmitted light scattered in a direction of 50 degrees from the normal direction, is 50% or more of the intensity of the transmitted light in the normal direction.
<11> A film comprising:

inorganic particles; and
a resin,
in which the following requirements 1 to 3 are satisfied,
requirement 1: in a case where light is incident on the film from a normal direction, an average transmittance of light in a wavelength range of 450 to 940 nm, transmitted in the normal direction, is 10% to 50%,
requirement 2: in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is 15% or less,
requirement 3: in a case where light is incident on the film from a normal direction, an intensity of light having a wavelength of 940 nm, which is transmitted through the film and is a transmitted light scattered in a direction of 10 degrees from the normal direction, is 90% or more of an intensity of a transmitted light in the normal direction, and an intensity of light having a wavelength of 940 nm, which is transmitted through the film and is a transmitted light scattered in a direction of 50 degrees from the normal direction, is 50% or more of the intensity of the transmitted light in the normal direction.

<12> The film according to any one of <1> to <11>,
in which a thickness of the film is 1 to 100 $\mu$m.
<13> An optical sensor comprising:
the film according to any one of <1> to <12>.

According to the present invention, it is possible to provide a film which can scatter and transmit incidence ray over a wide range and has high light scattering properties with respect to light having a wide wavelength range. In addition, according to the present invention, it is possible to provide an optical sensor.

## BRIEF DESCRIPTION OF THE DRAWINGS

Fig. 1 is a schematic diagram showing an embodiment of an optical sensor according to an aspect of the present invention.
Fig. 2 is a schematic diagram showing another embodiment of the optical sensor according to the aspect of the present invention.

## DESCRIPTION OF THE PREFERRED EMBODIMENTS

Hereinafter, the details of the present invention will be described.
The following description regarding configuration requirements has been made based on a representative embodiment of the present invention. However, the present invention is not limited to the embodiment.

In this specification, numerical ranges represented by "to" include numerical values before and after "to" as lower limit values and upper limit values.

In this specification, unless specified as a substituted group or as an unsubstituted group, a group (atomic group) denotes not only a group (atomic group) having no substituent but also a group (atomic group) having a substituent. For example, "alkyl group" denotes not only an alkyl group having no substituent (unsubstituted alkyl group) but also an alkyl group having a substituent (substituted alkyl group).

In this specification, "(meth)acrylate" represents acrylate or methacrylate, "(meth)acryl" represents acryl and methacryl, "(meth)allyl" represents allyl and methallyl, and "(meth)acryloyl" represents acryloyl and methacryloyl.

In this specification, in a chemical formula, Me represents a methyl group, Et represents an ethyl group, Pr represents a propyl group, Bu represents a butyl group, and Ph represents a phenyl group.

In this specification, unless specified otherwise, "exposure" denotes not only exposure using light but also drawing using a corpuscular beam such as an electron beam or an ion beam. Examples of the light used for exposure include an actinic ray or radiation, for example, a bright light spectrum of a mercury lamp, a far ultraviolet ray represented by excimer laser, an extreme ultraviolet ray (EUV ray), an X-ray, or an electron beam.

In this specification, a weight-average molecular weight and a number-average molecular weight are defined as values in terms of polystyrene measured by gel permeation chromatography (GPC). In this specification, the weight-average molecular weight (Mw) and the number-average molecular weight (Mn) can be obtained, for example, by using HLC-8220GPC (manufactured by Tosoh Corporation), using a column in which TOSOH TSK gel Super HZM-H, TOSOH TSK gel Super HZ4000, and TOSOH TSK gel Super HZ2000 are linked to each other, and using tetrahydrofuran as a developing solvent.

In this specification, a value of refractive index is a value of refractive index with refractive index to light at a wavelength of 589 nm at 23°C, unless otherwise specified.

<Film>

The film according to a first embodiment of the present invention includes a phase A having a refractive index of 1.7 or more to light having a wavelength of 550 nm and a phase B having a refractive index of 1.6 or less to light having a wavelength of 550 nm, in which the phase A and the phase B form a phase-separated structure in the film, and in a cross section of the film in a thickness direction, a total length of a distance in an interface between the phase A and the phase B per 1 μm × 1 μm is 2.90 to 5.00 μm.

The film according to the first embodiment can scatter and transmit incidence ray over a wide range and has high light scattering properties with respect to light having a wide wavelength range. Although the detailed reason for obtaining such effects is not known, since the phase-separated structure between the above-described phase A and the above-described phase B is formed in the film, and in the cross section in the thickness direction, the total length of the distance in the interface between the above-described phase A and the above-described phase B per 1 μm × 1 μm is 2.90 to 5.00 μm, in a case where the film is irradiated with light, it is presumed that this is because the incidence ray can be efficiently scattered between the phase A and the phase B in the film. In particular, in a case where the above-described total length in the interface is set to the above-described predetermined range, it is a surprising effect that high light scattering properties can be obtained with respect to light having a wide wavelength range.

In the cross section of the film in the thickness direction, the total length of the distance in the interface between the above-described phase A and the above-described phase B per 1 μm × 1 μm is preferably 3.00 to 4.90 μm, and more preferably 3.11 to 4.80 μm.

The formation of the phase-separated structure between the phase A and the phase B in the film can be observed using a scanning electron microscope (SEM), a transmission electron microscope (TEM), or an optical microscope. That is, in a cross-sectional image of the film, in a case where the phase A and the phase B are phase-separated, due to a difference in refractive index between the phase A and the phase B, the interface is observed as a shading pattern.

In addition, in the cross section of the film in the thickness direction, the total length of the distance in the interface between the phase A and the phase B per 1 μm × 1 μm can be obtained by the following method. That is, a predetermined range (for example, a range of 6 μm × 15 μm, and the like) is trimmed with respect to an image of the cross section of the film (for example, 7,500 times as a magnification of the image); the trimmed image is binarized using image processing software; edges of the binarized image are detected; the number of edge pixels in the detected image is counted and converted into a distance; the total length of the distance in the interface between the phase A and the phase B in the trimmed image is calculated; and the calculated total distance in the interface can be obtained by standardizing with the observation area (area of the trimmed image).

The phase-separated structure in the above-described film preferably has a phase interface isotropically present in the film, and for example, more preferably a sea-island structure or a co-continuous phase structure. By forming these phase-separated structures, light can be effectively scattered between the phase A and the phase B, and particularly excellent light scattering properties can be easily obtained. The sea-island structure is a structure formed by a sea region

which is a continuous region and an island region which is a discontinuous region. In the sea-island structure, the phase A may form the sea and the phase B may form the island, or the phase A may form the sea and the phase B may form the island. In addition, the co-continuous phase structure is a network structure in which the phase A and the phase B each form a continuous phase structure intrusive to each other.

In the above-described cross section of the film in the thickness direction, a ratio (area of phase B/area of phase A) of an area of the phase B to an area of the phase A is preferably 40 to 250, more preferably 50 to 200, and still more preferably 60 to 170.

In the film according to the first embodiment, it is preferable that at least one of the phase A or the phase B contains a resin, and it is more preferable that the phase A and the phase B each contain a resin. Examples of details of the resin include materials described in the item of resin of the composition for forming a film, which will be described later.

A weight-average molecular weight of the resin contained in the phase A is preferably 5,000 to 20,000, more preferably 6,000 to 18,000, and still more preferably 7,000 to 15,000. In addition, a weight-average molecular weight of the resin contained in the phase B is preferably 10,000 to 50,000, more preferably 12,000 to 40,000, and still more preferably 13,000 to 36,000.

An acid value of the resin contained in the phase A is preferably 100 to 200 mgKOH/g, more preferably 110 to 190 mgKOH/g, and still more preferably 120 to 180 mgKOH/g. An acid value of the resin contained in the phase B is preferably 30 to 150 mgKOH/g, more preferably 40 to 130 mgKOH/g, still more preferably 50 to 100 mgKOH/g, and particularly preferably 60 to 90 mgKOH/g. In addition, a difference between the acid value of the resin contained in the phase A and the acid value of the resin contained in the phase B is preferably 40 to 100 mgKOH/g, more preferably 50 to 95 mgKOH/g, and still more preferably 60 to 90 mgKOH/g.

It is preferable that the phase A and the phase B contains at least one resin selected from a resin having a structure in which a plurality of polymer chains are bonded to a tri- or higher valent linking group or a resin including a repeating unit having a graft chain.

Among these, it is preferable that one of the phase A or the phase B contains the resin having a structure in which a plurality of polymer chains are bonded to a tri- or higher valent linking group, and the other contains the resin including a repeating unit having a graft chain. In addition, in this aspect, it is preferable that the polymer chain in the resin having a structure in which a plurality of polymer chains are bonded to a tri- or higher valent linking group is a polymer chain including a repeating unit having a structure different from that of the graft chain in the resin including a repeating unit having a graft chain. The different repeating unit having a different structure means a repeating unit with a different main chain type of the repeating unit. Therefore, even in a case where the types of substituents bonded to the main chain are different, those with the same type of main chain of the repeating unit (for example, repeating units of poly (meth)acrylic structure, repeating units of polyester structure, and the like) correspond to repeating units having the same structure. Examples thereof include a combination in which the polymer chain in the resin having a structure in which a plurality of polymer chains are bonded to a tri- or higher valent linking group is a polymer chain including a polyether structural repeating unit, a polyester structural repeating unit, a poly (meth)acrylic structural repeating unit, or a polystyrene structural repeating unit, and the graft chain in the resin including a repeating unit having a graft chain is a graft chain including a repeating unit which has a structure different from that of the polymer chain and has a polyether structure, a polyester structure, a poly(meth)acrylic structure, or a polystyrene structure.

It is preferable that the phase A of the film according to the first embodiment contains inorganic particles. An average primary particle diameter of the inorganic particles is preferably 200 nm or less, more preferably 150 mn or less, and still more preferably 130 nm or less. The lower limit is preferably 5 nm or more, more preferably 10 nm or more, still more preferably 20 nm or more, even more preferably 30 nm or more, still even more preferably 40 nm or more, and particularly preferably 50 nm or more.

In this specification, the average primary particle diameter of particles is a value measured by the following method. That is, the primary particle diameter of the inorganic particles can be obtained by observing the particles with a transmission electron microscope (TEM) and observing a portion (primary particle) where the particles do not aggregate. A particle size distribution of the particles can be obtained by imaging a transmission electron micrograph of the primary particles using a transmission electron microscope and measuring a particle size distribution with an image processing device using the micrograph. In this specification, the average primary particle diameter of the particles refers to the number average particle size calculated from the particle size distribution. In this specification, an electron microscope (H-7000, manufactured by Hitachi, Ltd.) is used as the transmission electron microscope, and a LUZEX AP (manufactured by Nireco Corporation) is used as the image processing device.

A refractive index of the inorganic particles to light having a wavelength of 550 nm is preferably 1.7 or more, more preferably 1.8 or more, and still more preferably 2.0 or more. The upper limit of the refractive index is not particularly limited, but may be 5 or less or 4 or less.

In this specification, the refractive index of particles is a value measured by the following method. First, a dispersion liquid is prepared using the particles, a resin (dispersant) having a known refractive index, and propylene

glycol monomethyl ether acetate. Next, the prepared dispersion liquid and a resin having a known refractive index are mixed with each other to prepare coating liquids in which the concentrations of the particles is 10 mass%, 20 mass%, 30 mass%, and 40 mass% with respect to the total solid content of the coating liquids. Using each of the coating liquids, a film having a thickness of 300 nm is formed on a silicon wafer, and the refractive index of the obtained film is measured by ellipsometry (LAMBDA ACE RE-3300, manufactured by SCREEN Holdings Co., Ltd.). Next, the refractive index corresponding to the concentration of the particles is plotted on a graph to derive the refractive index of the particles.

Specific examples of the inorganic particles include titanium oxide particles, strontium titanate particles, barium titanate particles, zinc oxide particles, magnesium oxide particles, zirconium oxide particles, aluminum oxide particles, aluminum hydroxide particles, barium sulfate particles, and zinc sulfide particles, and it is preferable to include titanium oxide particles. It is also a preferred aspect that the aluminum hydroxide particles and the titanium oxide particles are used in combination. According to this aspect, photocatalytic activity of titanium oxide can be suppressed. In addition, the dispersant is likely to be adsorbed to the inorganic particles, and dispersion stability of the inorganic particles in the composition can be improved.

In the titanium oxide particles, the content (purity) of titanium dioxide ($TiO_2$) is preferably 70 mass% or more, more preferably 80 mass% or more, and still more preferably 85 mass% or more. In the titanium oxide particles, the content of lower titanium oxide represented by $Ti_nO_{2n-1}$ (n represents a number of 2 to 4), titanium nitride, or the like is preferably 30 mass% or less, more preferably 20 mass% or less, and still more preferably 15 mass% or less.

The titanium oxide may be rutile type titanium oxide or anatase type titanium oxide. From the viewpoint of colorability and the temporal stability of the dispersion liquid or the composition, rutile type titanium oxide is preferable. In particular, rutile type titanium oxide has a small change in color difference and excellent colorability even under heating. In addition, the rutile transformation rate of the titanium oxide is preferably 95% or more and more preferably 99% or more.

As rutile type titanium oxide, a known titanium oxide can be used. As a method of manufacturing rutile type titanium oxide, two methods including a sulfuric acid method and a chlorine method are present, and a titanium oxide manufactured using any one of the methods can be suitably used. Here, the sulfuric acid method refers to a manufacturing method including: dissolving ilmenite ore or titanium slug as a raw material in concentrated sulfuric acid to separate iron as iron sulfate; hydrolyzing the separated solution to obtain a precipitate of hydroxide; and calcinating the precipitate at a high temperature to extract rutile type titanium oxide. In addition, the chlorine method refers to a manufacturing method including: causing synthetic rutile or natural rutile as a raw material to react with chlorine gas or carbon at a high temperature of approximately 1,000°C to synthesize of titanium tetrachloride; and oxidizing the titanium tetrachloride at a high temperature to extract rutile type titanium oxide. It is preferable that rutile type titanium oxide is obtained using the chlorine method.

As the specific surface area of titanium oxide particles, a value measured using a Brunauer, Emmett, Teller (BET) method is preferably 10 to 400 $m^2/g$, more preferably 10 to 200 $m^2/g$, still more preferably 10 to 150 $m^2/g$, particularly preferably 10 to 40 $m^2/g$, and most preferably 10 to 20 $m^2/g$. The pH of titanium oxide is preferably 6 to 8. The oil absorption of titanium oxide is preferably 10 to 60 (g/100 g) and more preferably 10 to 40 (g/100 g).

In the titanium oxide particles, the total content of $Fe_2O_3$, $Al_2O_3$, $SiO_2$, $Nb_2O_5$, and $Na_2O$ is preferably 0.1 mass% or less, more preferably 0.05 mass% or less, still more preferably 0.02 mass% or less, and particularly preferably substantially 0 mass%.

The shape of the titanium oxide particles is not particularly limited. Examples of the shape of titanium oxide include an isotropic shape (for example, a spherical shape and a polyhedral shape), an anisotropic shape (for example, a needle shape, a rod shape, and a plate shape), and an unstructured shape. The hardness (Mohs hardness) of titanium oxide particles is preferably 5 to 8 and more preferably 7 to 7.5.

The inorganic particles such as the titanium oxide particles may be surface-treated with a surface treatment agent such as an organic compound. Examples of the surface treatment agent used for the surface treatment of the titanium oxide include polyol, aluminum oxide, aluminum hydroxide, silica (silicon oxide), water-containing silica, alkanolamine, stearic acid, organosiloxane, zirconium oxide, hydrogen dimethicone, a silane coupling agent, and a titanate coupling agent. In particular, a silane coupling agent is preferable. The surface treatment may be performed using one surface treatment agent alone or a combination of two or more surface treatment agents.

It is also preferable that the inorganic particles such as the titanium oxide particles are covered with a basic metal oxide or a basic metal hydroxide. Examples of the basic metal oxide or the basic metal hydroxide include a metal compound including magnesium, zirconium, cerium, strontium, antimony, barium, calcium, or the like.

In addition, as the titanium oxide particles, titanium oxide particles described in "Titanium Oxide - Physical Properties and Applied Technology, Manabu Kiyono, pp. 13 to 45, June 25, 1991, published by Gihodo Shuppan Co., Ltd.) can also be suitably used.

A commercially available product can be used as the inorganic particles. The commercially available product may be used as it is or may be used after a classification treatment. Examples of the commercially available product of titanium oxide particles include:

products manufactured by ISHIHARA SANGYO KAISHA, LTD. such as trade name TIPAQUE R-550, R-580, R-630, R-670, R-680, R-780, R-780-2, R-820, R-830, R-850, R-855, R-930, R-980, CR-50, CR-50-2, CR-57, CR-58, CR-58-2, CR-60, CR-60-2, CR-63, CR-67, CR-Super 70, CR-80, CR-85, CR-90, CR-90-2, CR-93, CR-95, CR-953, CR-97, PF-736, PF-737, PF-742, PF-690, PF-691, PF-711, PF-739, PF-740, PC-3, S-305, CR-EL, PT-301, PT-401M, PT-401L, PT-501A, PT-501R, UT771, TTO-51, TTO-80A, TTO-S-2, A-220, MPT-136, MPT-140, or MPT-141;
products manufactured by Sakai Chemical Industry Co., Ltd. such as trade names R-3L, R-5N, R-7E, R-11P, R-21, R-25, R-32, R-42, R-44, R-45M, R-62N, R-310, R-650, SR-1, D-918, GTR-100, FTR-700, TCR-52, A-110, A-190, SA-1, SA-1L, STR-100A-LP, STR-100C-LP, or TCA-123E;
products manufactured by TAYCA Corporation such as trade name JR, JRNC, JR-301, JR-403, JR-405, JR-600A, JR-600E, JR-603, JR-605, JR-701, JR-800, JR-805, JR-806, JR-1000, MT-01, MT-05, MT-10EX, MT-100S, MT-100TV, MT-100Z, MT-100AQ, MT-100WP, MT-100SA, MT-100HD, MT-150EX, MT-150W, MT-300HD, MT-500B, MT-500SA, MT-500HD, MT-600B, MT-600SA, MT-700B, MT-700BS, MT-700HD, or MT-700Z;
products manufactured by Titan Kogyo Ltd. such as trade name KR-310, KR-380, KR-380N, or ST-485SA15;
products manufactured by Fuji Titanium Industry Co., Ltd. such as trade name TR-600, TR-700, TR-750, TR-840, or TR-900; and
products manufactured by Shiraishi Calcium Kaisha Ltd. such as trade name Brilliant 1500. In addition, titanium oxide particles described in paragraphs "0025" to "0027" of JP2015-067794A can also be used.

Examples of a commercially available product of strontium titanate particles include SW-100 (manufactured by Titan Kogyo Ltd.). Examples of a commercially available product of barium sulfate particles include BF-1L (manufactured by Sakai Chemical Industry Co., Ltd.). Examples of a commercially available product of zinc oxide particles include Zincox Super F-1 (manufactured by Hakusui Chemical Co., Ltd.). Examples of a commercially available product of zirconium oxide particles include Z-NX (manufactured by Taiyo Koko Co., Ltd.) and Zirconeo-Cp (manufactured by ITEC Co., Ltd.).

The film according to the first embodiment may further contain a cured substance derived from a polymerizable monomer. The cured substance derived from a polymerizable monomer may be contained in either one or both of the phase A and the phase B, but is preferably contained in at least the phase B. Examples of the cured substance derived from a polymerizable monomer include a cured substance derived from materials described in the item of a polymerizable monomer of the composition for forming a film, which will be described later.

The film according to the first embodiment may further contain materials described in the composition for forming a film.

Examples of a preferred aspect of the film according to the first embodiment include a film of an aspect in which the phase A contains the inorganic particles, a surface of the inorganic particles contained in the phase A is surface-modified with a first resin, and the phase B contains a second resin different from the first resin and the cured substance derived from a polymerizable monomer.

Examples of the surface modification of the inorganic particles include treatment with a dispersant. That is, the first resin used for surface modification of the inorganic particles is preferably a resin as a dispersant. In addition, examples of a preferred combination of the first resin and the second resin include a combination in which the first resin is the resin having a structure in which a plurality of polymer chains are bonded to a tri- or higher valent linking group and the second resin is the resin including a repeating unit having a graft chain, and a combination in which the second resin is the resin having a structure in which a plurality of polymer chains are bonded to a tri- or higher valent linking group and the first resin is the resin including a repeating unit having a graft chain. From the reason that, in the cross section of the film in the thickness direction, the total length of the distance in the interface between the phase A and the phase B per 1 $\mu$m $\times$ 1 $\mu$m is easily adjusted within the above-described range, a combination in which the first resin is the resin having a structure in which a plurality of polymer chains are bonded to a tri- or higher valent linking group and the second resin is the resin including a repeating unit having a graft chain is preferable.

In addition, a proportion of the first resin and the second resin is preferably 50 to 300 parts by mass of the second resin with respect to 100 parts by mass of the first resin. The upper limit is preferably 250 parts by mass or less and more preferably 200 parts by mass or less. The lower limit is preferably 75 parts by mass or more and more preferably 100 parts by mass or more.

In addition, a weight-average molecular weight of the first resin is preferably 5,000 to 20,000, more preferably 6,000 to 18,000, and still more preferably 7,000 to 15,000. In addition, a weight-average molecular weight of the second resin is preferably 10,000 to 50,000, more preferably 12,000 to 40,000, and still more preferably 13,000 to 36,000.

In addition, an acid value of the first resin is preferably 100 to 200 mgKOH/g, more preferably 110 to 190 mgKOH/g, and still more preferably 120 to 180 mgKOH/g. In addition, an acid value of the second resin is preferably 30 to 150 mgKOH/g, more preferably 40 to 130 mgKOH/g, still more preferably 50 to 100 mgKOH/g, and particularly preferably 60 to 90 mgKOH/g. In addition, a difference between the acid value of the resin contained in the phase A and the acid value of the resin contained in the phase B is preferably 40 to 100 mgKOH/g, more preferably 50 to 95 mgKOH/g,

and still more preferably 60 to 90 mgKOH/g. In addition, a difference between the acid value of first resin and the acid value of the second resin is preferably 40 to 100 mgKOH/g, more preferably 50 to 95 mgKOH/g, and still more preferably 60 to 90 mgKOH/g.

In the film according to the first embodiment, in a case where light is incident on the film from a normal direction, an average transmittance of light in a wavelength range of 450 to 940 nm, transmitted in the normal direction, is preferably 10% to 50%, more preferably 15% to 45%, and still more preferably 20% to 40%. In a case where the average transmittance of the film is within the above-described range, a sufficient light scattering ability can be obtained while ensuring a sufficient amount of light transmission.

In the film according to the first embodiment, in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is preferably 15% or less, more preferably 13% or less, and still more preferably 10% or less. According to this aspect, it is possible to obtain a film in which a scattering property for light having a wavelength of 450 nm and a scattering property for light having a wavelength of 940 nm is substantially the same, and light scattering properties with respect to light having a wavelength range of 450 to 940 nm are excellent.

In the film according to the first embodiment, it is preferable that, in a case where light is incident on the film from a normal direction, an intensity of light having a wavelength of 940 nm, which is transmitted through the film and is a transmitted light scattered in a direction of 10 degrees from the normal direction, is 90% or more (preferably, 95% or more) of an intensity of a transmitted light in the normal direction, and an intensity of light having a wavelength of 940 nm, which is transmitted through the film and is a transmitted light scattered in a direction of 50 degrees from the normal direction, is 50% or more (preferably, 55% or more) of the intensity of the transmitted light in the normal direction. According to this aspect, it is possible to obtain a film having high light scattering properties over a range of 0 to 50 degrees with respect to the normal direction of the film.

The film according to the first embodiment can be formed of, for example, a composition for forming a film, which will be described later. In addition, for example, in a case of a film formed of a composition for forming a film, which contains inorganic particles, two or more resins, and a polymerizable monomer, the above-described total length in the interface can be adjusted by changing the type of the inorganic particles, the combination and blending proportion of the resins, the combination and blending proportion of the resin and polymerizable monomer, and the like.

The film according to a second embodiment of the present invention is a film containing inorganic particles and a resin, in which the following requirements 1 to 3 are satisfied.

Requirement 1: in a case where light is incident on the film from a normal direction, an average transmittance of light in a wavelength range of 450 to 940 nm, transmitted in the normal direction, is 10% to 50%

Requirement 2: in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is 15% or less

Requirement 3: in a case where light is incident on the film from a normal direction, an intensity of light having a wavelength of 940 nm, which is transmitted through the film and is a transmitted light scattered in a direction of 10 degrees from the normal direction, is 90% or more of an intensity of a transmitted light in the normal direction, and an intensity of light having a wavelength of 940 nm, which is transmitted through the film and is a transmitted light scattered in a direction of 50 degrees from the normal direction, is 50% or more of the intensity of the transmitted light in the normal direction

With the film according to the second embodiment, by having such characteristics, the film can scatter and transmit incidence ray over a wide range and has high light scattering properties with respect to light having a wide wavelength range.

In the above-described requirement 1, in a case where light is incident on the film from the normal direction, the average transmittance of light in a wavelength range of 450 to 940 nm, transmitted in the normal direction, is more preferably 15% to 45%, and still more preferably 20% to 40%.

In the above-described requirement 2, in a case where light is incident on the film from the normal direction, the absolute value of the difference between the transmittance of light having a wavelength of 940 nm, transmitted in the normal direction, and the transmittance of light having a wavelength of 450 nm, transmitted in the normal direction, is preferably 13% or less, and more preferably 10% or less.

In the above-described requirement 3, the intensity of the transmitted light scattered in a direction of 10 degrees from the normal direction is preferably 95% or more of the transmitted light in the normal direction. In addition, the intensity of the transmitted light scattered in a direction of 50 degrees from the normal direction is preferably 55% or more of the transmitted light in the normal direction.

The film according to the second embodiment can be formed of a composition for forming a film, which will be described later.

In the films according to the first embodiment and the second embodiment (hereinafter, both are collectively

referred to as a film according to the embodiment of the present invention), in a case where light is incident on the film from a normal direction, a transmittance of light having a wavelength of 450 nm, transmitted in the normal direction, is preferably 10% to 35%, more preferably 13% to 30%, and still more preferably 15% to 25%.

In the film according to the embodiment of the present invention, in a case where light is incident on the film from a normal direction, a transmittance of light having a wavelength of 940 nm, transmitted in the normal direction, is preferably 15% to 50%, more preferably 20% to 40%, and still more preferably 25% to 35%.

The value of L* of the film according to the embodiment of the present invention in the L*a*b* color system of CIE 1976 is preferably 35 to 100. The value of L* is preferably 40 or more, more preferably 50 or more, and still more preferably 60 or more. In addition, the value of L* is preferably 95 or less, more preferably 90 or less, and still more preferably 85 or less. In addition, the value of a* is preferably -15 or more, more preferably -10 or more, and still more preferably -5 or more. In addition, the value of a* is preferably 10 or less, more preferably 5 or less, and still more preferably 0 or less. In addition, the value of b* is preferably -35 or more, more preferably -30 or more, and still more preferably -25 or more. In addition, the value of b* is preferably 20 or less, more preferably 10 or less, and still more preferably 0 or less.

A thickness of the film according to the embodiment of the present invention is preferably 1 to 100 μm. The upper limit of the film thickness is preferably 50 μm or less, more preferably 30 μm or less, and still more preferably 10 μm or less. The lower limit of the film thickness is preferably 2 μm or more, more preferably 4 μm or more, and still more preferably 6 μm or more. In a case where the film thickness is within the above-described range, a sufficient light scattering ability can be obtained.

The film according to the embodiment of the present invention has high light scattering properties, and is preferably used as a light scattering film. For example, the film according to the embodiment of the present invention can be suitably used for a scattering layer for a light emitting element, a scattering layer for a display element, a scattering layer for an ambient optical sensor, and the like.

<Composition for forming film>

Next, a composition for forming a film, which can be used for forming the film according to the embodiment of the present invention, will be described.

<<Inorganic particles>>

The composition for forming a film preferably contains inorganic particles. Examples of the inorganic particles include the inorganic particles described as being preferably included in the film according to the first embodiment described above, and the preferred range thereof is also the same.

A content of the inorganic particles in the total solid content of the composition for forming a film is preferably 20 to 60 mass%. The upper limit is preferably 50 mass% or less and more preferably 45 mass% or less. The lower limit is preferably 30 mass% or more and more preferably 35 mass% or more. The composition for forming a film may contain only one kind of the inorganic particles or two or more kinds of the inorganic particles. In a case where two or more kinds of the inorganic particles are included, the total content thereof is preferably within the above-described range.

<<Resin>>

The composition for forming a film preferably contains a resin. The resin is blended in, for example, an application for dispersing particles and the like in the composition for forming a film, or an application as a binder. Mainly, a resin which is used for dispersing particles is also referred to as a dispersant. However, such applications of the resin are only exemplary, and the resin can also be used for other purposes in addition to such applications.

As the resin, any known resin can be used. Examples of the resin include a (meth)acrylic resin, a (meth)acrylamide resin, an epoxy resin, an ene-thiol resin, a polycarbonate resin, a polyether resin, a polyarylate resin, a polysulfone resin, a polyethersulfone resin, a polyphenylene resin, a polyarylene ether phosphine oxide resin, a polyimide resin, a polyamide resin, a polyolefin resin, a cyclic olefin resin, a polyester resin, a styrene resin, a silicone resin, and a urethane resin.

A weight-average molecular weight (Mw) of the resin is preferably 2,000 to 2,000,000. The upper limit is preferably 1,000,000 or less and more preferably 500,000 or less. The lower limit is preferably 3,000 or more, more preferably 4,000 or more, and still more preferably 5,000 or more.

As the resin, a resin having an acid group can be used. The resin having an acid group can also be used as an alkali-soluble resin or a dispersant.

Examples of the resin having an acid group include a resin having a repeating unit having an acid group. Examples of the acid group include a carboxyl group, a phosphoric acid group, a sulfo group, and a phenolic hydroxy

group. Among these, a carboxyl group is preferable. In addition, the carboxyl group is preferably an aromatic carboxyl group. Here, the aromatic carboxyl group is a group having a structure in which one or more carboxyl groups are bonded to an aromatic ring. In the aromatic carboxyl group, the number of carboxyl groups bonded to an aromatic ring is preferably 1 to 4 and more preferably 1 or 2. In addition, it is preferable to use, as the resin having an acid group, a resin including a repeating unit derived from vinylbenzoic acid (that is, a polyvinyl benzoic acid structural repeating unit). According to this aspect, it is possible to form a film in which the interface distance between the phase A and the phase B can be easily adjusted and the light scattering properties are more excellent. The repeating unit derived from vinylbenzoic acid is a repeating unit having the following structure.

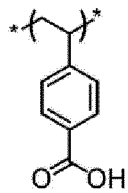

An acid value of the resin having an acid group is preferably 30 to 500 mgKOH/g. The lower limit is more preferably 50 mgKOH/g or more and still more preferably 70 mgKOH/g or more. The upper limit is more preferably 400 mgKOH/g or less, still more preferably 200 mgKOH/g or less, even still more preferably 150 mgKOH/g or less, and most preferably 120 mgKOH/g or less.

As the resin, a resin including a repeating unit derived from a compound represented by Formula (ED1) and/or a compound represented by Formula (ED2) (hereinafter, these compounds will also be referred to as an "ether dimer") can be used.

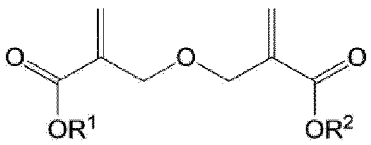

(ED1)

In Formula (ED1), $R^1$ and $R^2$ each independently represent a hydrogen atom or a hydrocarbon group having 1 to 25 carbon atoms, which may have a substituent.

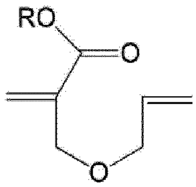

(ED2)

In Formula (ED2), R represents a hydrogen atom or an organic group having 1 to 30 carbon atoms. Specific examples of Formula (ED2) can be found in the description of JP2010-168539A.

Specific examples of the ether dimer can be found in paragraph "0317" of JP2013-029760A, the contents of which are incorporated herein by reference.

As the resin, a resin including a repeating unit derived from a compound represented by Formula (X) can be used.

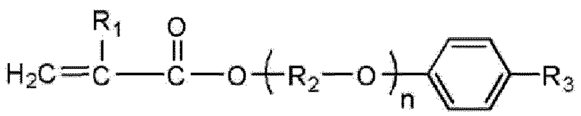

(X)

In Formula (X), $R_1$ represents a hydrogen atom or a methyl group, $R_2$ represents an alkylene group having 2 to 10 carbon atoms, and $R_3$ represents a hydrogen atom or an alkyl group having 1 to 20 carbon atoms, which may have a benzene ring. n represents an integer of 1 to 15.

The composition for forming a film preferably contains a resin including a repeating unit having a graft chain. In a case of containing the resin including a repeating unit having a graft chain, due to steric hindrance caused by the graft chain, aggregation and the like of particles in the composition for forming a film can be suppressed more effectively,

and excellent storage stability can be obtained. In addition, it is possible to easily form the phase-separated structure between the phase A and the phase B in the film during film formation. The resin including a repeating unit having a graft chain may be used as a dispersant or a binder.

In the present specification, the graft chain means a polymer chain branched and extended from the main chain of the repeating unit. The length of the graft chain is not particularly limited, and in a case where the graft chain is longer, a steric repulsion effect is enhanced, and thus it is possible to improve dispersibility of the particles and facilitate the formation of the phase-separated structure. As the graft chain, the number of atoms excluding the hydrogen atoms is preferably 40 to 10,000, the number of atoms excluding the hydrogen atoms is more preferably 50 to 2,000, and the number of atoms excluding the hydrogen atoms is still more preferably 60 to 500.

The graft chain preferably includes a repeating unit having at least one structure selected from a polyether structure, a polyester structure, a poly(meth)acrylic structure, a polystyrene structure, a polyurethane structure, a polyurea structure, or a polyamide structure, more preferably includes a repeating unit having at least one structure selected from a polyether structure, a polyester structure, a poly(meth)acrylic structure, or a polystyrene structure, still more preferably includes a polyether structural repeating unit or a polyester structural repeating unit, and particularly preferably includes a polyester structural repeating unit.

Examples of the polyester structural repeating unit include a repeating unit having a structure represented by Formula (G-1), Formula (G-4), or Formula (G-5). Examples of the polyether structural repeating unit include a repeating unit having a structure represented by Formula (G-2). Examples of the poly(meth)acrylic structural repeating unit include a repeating unit having a structure represented by Formula (G-3). Examples of the polystyrene structural repeating unit include a repeating unit having a structure represented by Formula (G-6).

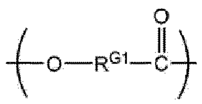
(G-1)

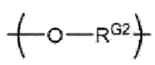
(G-2)

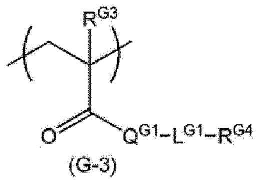
(G-3)

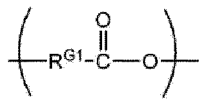
(G-4)

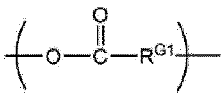
(G-5)

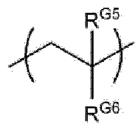
(G-6)

In the formulae, $R^{G1}$ and $R^{G2}$ each independently represent an alkylene group. The alkylene group represented by $R^{G1}$ and $R^{G2}$ is not particularly limited, but is preferably a linear or branched alkylene group having 1 to 20 carbon atoms, more preferably a linear or branched alkylene group having 2 to 16 carbon atoms, and still more preferably a linear or branched alkylene group having 3 to 12 carbon atoms.

In the formulae, $R^{G3}$ represents a hydrogen atom or a methyl group, $Q^{G1}$ represents -O- or -NH-, $L^{G1}$ represents a single bond or a divalent linking group, and $R^{G4}$ represents a hydrogen atom or a substituent.

Examples of the divalent linking group represented by $L^{G1}$ include an alkylene group (preferably an alkylene group having 1 to 12 carbon atoms), an alkyleneoxy group (preferably an alkyleneoxy group having 1 to 12 carbon atoms), an oxyalkylenecarbonyl group (preferably an oxyalkylenecarbonyl group having 1 to 12 carbon atoms), an arylene group (preferably an arylene group having 6 to 20 carbon atoms), -NH-, -SO-, $-SO_2-$, -CO-, -O-, -COO-, OCO-, -S-, and a group formed by a combination of two or more of these groups.

Examples of the substituent represented by $R^{G4}$ include a hydroxy group, a carboxy group, an alkyl group, an aryl group, a heterocyclic group, an alkoxy group, an aryloxy group, a heteroaryloxy group, an alkylthioether group, an arylthioether group, a heterothioether group, an ethylenically unsaturated bond-containing group, an epoxy group, an oxetanyl group, and a blocked isocyanate group.

$R^{G5}$ represents a hydrogen atom or a methyl group and $R^{G6}$ represents an aryl group. The number of carbon atoms in the aryl group represented by $R^{G6}$ is preferably 6 to 30, more preferably 6 to 20, and still more preferably 6 to 12. The aryl group represented by $R^{G6}$ may have a substituent. Examples of the substituent include a hydroxy group, a carboxy group, an alkyl group, an aryl group, a heterocyclic group, an alkoxy group, an aryloxy group, a heteroaryloxy group, an alkylthioether group, an arylthioether group, a heterothioether group, an ethylenically unsaturated bond-containing group, an epoxy group, an oxetanyl group, and a blocked isocyanate group.

A terminal structure of the graft chain is not particularly limited. The terminal structure may be a hydrogen atom or a substituent. Examples of the substituent include an alkyl group, an aryl group, a heteroaryl group, an alkoxy group,

an aryloxy group, a heteroaryloxy group, an alkylthioether group, an arylthioether group, and a heteroarylthioether group. Among these, from the viewpoint of improvement of the dispersibility of the particles, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

The graft chain preferably has a structure represented by Formula (G-1a), Formula (G-2a), Formula (G-3a), Formula (G-4a), Formula (G-5a), or Formula (G-6a), and more preferably has a structure represented by Formula (G-1a), Formula (G-4a), or Formula (G-5a).

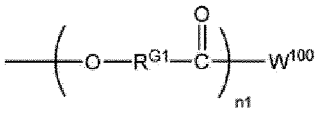
(G-1a)

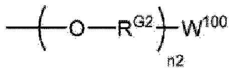
(G-2a)

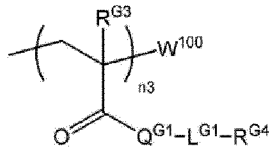
(G-3a)

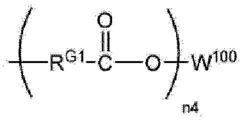
(G-4a)

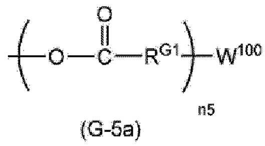
(G-5a)

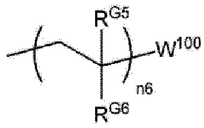
(G-6a)

In the formulae, $R^{G1}$ and $R^{G2}$ each independently represent an alkylene group, $R^{G3}$ represents a hydrogen atom or a methyl group, $Q^{G1}$ represents -O- or -NH-, $L^{G1}$ represents a single bond or a divalent linking group, $R^{G4}$ represents a hydrogen atom or a substituent, $R^{G5}$ represents a hydrogen atom or a methyl group, $R^{G6}$ represents an aryl group, $W^{100}$ represents a hydrogen atom or a substituent, and n1 to n6 each independently represent an integer of 2 or more. $R^{G1}$ to $R^{G6}$, $Q^{G1}$, and $L^{G1}$ have the same meanings as $R^{G1}$ to $R^{G6}$, $Q^{G1}$, and $L^{G1}$ described in Formulae (G-1) to (G-6), and preferred ranges thereof are also the same.

In Formulae (G-1a) to (G-6a), it is preferable that $W^{100}$ represents a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group. Among these, from the viewpoint of improvement of the dispersibility of the particles and the like, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

In Formulae (G-1a) to (6-5a), n1 to n6 each are preferably an integer of 2 to 100, more preferably an integer of 2 to 80, and still more preferably an integer of 8 to 60.

In Formula (G-1a), in a case where n1 is 2 or more, a plurality of $R^{G1}$'s in each repeating unit may be the same or different from each other. In a case where $R^{G1}$ includes two or more kinds of repeating units different from each other, the arrangement of the repeating units is not particularly limited, and may be performed in any of a random manner, an alternative manner, and a blocked manner. The same applies to Formulae (G-2a) to (G-6a). In addition, the graft chain also preferably has a structure which is represented by Formula (G-1a), Formula (G-4a), or Formula (G-5a) and includes two or more repeating units having different $R^{G1}$'s.

Examples of the repeating unit having a graft chain include a repeating unit represented by Formula (A-1-2).

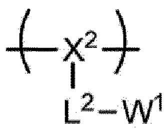
(A-1-2)

In Formula (A-1-2), $X^2$ represents the main chain of the repeating unit, $L^2$ represents a single bond or a divalent linking group, and $W^1$ represents a graft chain.

The main chain of the repeating unit, represented by $X^2$, is not particularly limited as long as it is a linking group

formed from a known polymerizable monomer. Examples thereof include a poly(meth)acrylic linking group, a polyalkyleneimine-based linking group, a polyester-based linking group, a polyurethane-based linking group, a polyuria-based linking group, a polyamide-based linking group, a polyether-based linking group, and a polystyrene-based linking group. Among these, a poly(meth)acrylic linking group or a polyalkyleneimine-based linking group is preferable, and a poly(meth)acrylic linking group is more preferable from the viewpoint of availability of raw materials and manufacturing suitability.

Examples of the divalent linking group represented by $L^2$ include an alkylene group (preferably an alkylene group having 1 to 12 carbon atoms), an arylene group (preferably an arylene group having 6 to 20 carbon atoms), -NH-, -SO-, $-SO_2-$, -CO-, -O-, -COO-, -OCO-, -S-, and a group formed by a combination of two or more of these groups.

Examples of the graft chain represented by $W^1$ include the graft chains described above.

Specific examples of the repeating unit represented by Formula (A-1-2) include a repeating unit represented by Formula (A-1-2a) and a repeating unit represented by Formula (A-1-2b).

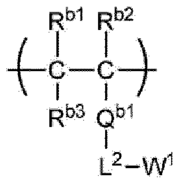

(A-1-2a)

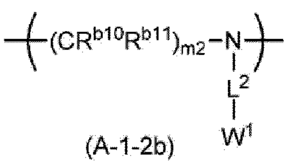

(A-1-2b)

In Formula (A-1-2a), $R^{b1}$ to $R^{b3}$ each independently represent a hydrogen atom or an alkyl group, $Q^{b1}$ represents -CO-, -COO-, -OCO-, -CONH-, or a phenylene group, $L^2$ represents a single bond or a divalent linking group, and $W^1$ represents a graft chain. The number of carbon atoms in the alkyl group represented by $R^{b1}$ to $R^{b3}$ is preferably 1 to 10, more preferably 1 to 3, and still more preferably 1. $Q^{b1}$ is preferably -COO- or -CONH- and more preferably -COO-.

In Formula (A-1-2b), $R^{b10}$ and $R^{b11}$ each independently represent a hydrogen atom or an alkyl group, m2 represents an integer of 1 to 5, $L^2$ represents a single bond or a divalent linking group, and $W^1$ represents a graft chain. The number of carbon atoms in the alkyl group represented by $R^{b10}$ and $R^{b11}$ is preferably 1 to 10 and more preferably 1 to 3.

A weight-average molecular weight (Mw) of the repeating unit having a graft chain is preferably 1,000 or more, more preferably 1,000 to 10,000, and still more preferably 1,000 to 7,500. In the present specification, the weight-average molecular weight of the repeating unit having a graft chain is a value calculated from the weight-average molecular weight of the raw material monomer used for the polymerization of the repeating unit. For example, the repeating unit having a graft chain can be formed by polymerizing a macromonomer. Here, the macromonomer means a polymer compound in which a polymerizable group is introduced at a polymer terminal. In a case where the repeating unit having a graft chain is formed using a macromonomer, the weight-average molecular weight of the macromonomer corresponds to the repeating unit having a graft chain.

A content of the repeating unit having a graft chain in the resin including a repeating unit having a graft chain is preferably 30 to 70 mass%, more preferably 40 to 60 mass%, and still more preferably 45 to 55 mass%.

It is also preferable that the resin including a repeating unit having a graft chain has a repeating unit having an acid group and a repeating unit having neither a graft chain nor an acid group, respectively. According to this aspect, it is possible to prevent a phase separation size from being excessively large in the film, and it is possible to form a film having more excellent light scattering properties. Examples of the acid group included in the repeating unit having an acid group include a carboxyl group, a phosphoric acid group, a sulfo group, and a phenolic hydroxy group. Among these, a carboxyl group is preferable. In addition, the carboxyl group is preferably an aromatic carboxyl group. In addition, the repeating unit having an acid group is preferably the repeating unit derived from vinylbenzoic acid. In addition, the repeating unit having neither a graft chain nor an acid group is preferably a repeating unit derived from (meth)acrylic acid ester, and more preferably a repeating unit derived from benzyl (meth)acrylate.

A content of the repeating unit having an acid group (preferably, a content of the repeating unit derived from vinylbenzoic acid) in the resin including a repeating unit having a graft chain is preferably 5 to 50 mass%, more preferably 10 to 40 mass%, and still more preferably 15 to 35 mass%.

In addition, a content of the repeating unit having neither a graft chain nor an acid group (preferably, a content of the repeating unit derived from benzyl (meth)acrylate) in the resin including a repeating unit having a graft chain is preferably 5 to 50 mass%, more preferably 10 to 40 mass%, and still more preferably 15 to 35 mass%. In addition, the content of the repeating unit derived from vinylbenzoic acid in the resin including a repeating unit having a graft chain is preferably 5 to 50 mass%, more preferably 10 to 40 mass%, and still more preferably 15 to 35 mass%.

A weight-average molecular weight of the resin including a repeating unit having a graft chain is preferably

10,000 to 50,000, more preferably 12,000 to 40,000, and still more preferably 13,000 to 36,000.

As the composition for forming a film, it is also preferable to use the resin having a structure in which a plurality of polymer chains are bonded to a tri- or higher valent linking group. In a case where the composition for forming a film contains such a resin, due to steric hindrance caused by the polymer chain, aggregation and the like of particles in the composition for forming a film can be suppressed more effectively, and excellent storage stability can be obtained. In addition, it is possible to easily form the phase-separated structure between the phase A and the phase B in the film during film formation.

A weight-average molecular weight of the resin having a structure in which a plurality of polymer chains are bonded to a tri- or higher valent linking group is preferably 5,000 to 20,000, more preferably 6,000 to 18,000, and still more preferably 7,000 to 15,000.

Examples of the resin having a structure in which a plurality of polymer chains are bonded to a tri- or higher valent linking group include a resin (hereinafter, also referred to as a resin (SP-1)) having a structure represented by Formula (SP-1).

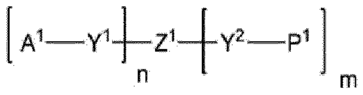

(SP-1)

In the formula, $Z^1$ represents an (m+n)-valent linking group,

$Y^1$ and $Y^2$ each independently represent a single bond or a linking group,
$A^1$ represents a group including a functional group selected from a heterocyclic group, an acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group,
$P^1$ represents a polymer chain,
n represents 1 to 20, m represents 2 to 20, and m+n is 3 to 21,
in a case where n is 2 or more, n pieces of $Y^1$'s and $A^1$'s may be the same or different from each other, and
m pieces of $Y^2$'s and $P^1$'s may be the same or different from each other.

At least one of $Z^1$, $A^1$, or $P^1$ in Formula (SP-1) may include an ethylenically unsaturated bond-containing group. Examples of the ethylenically unsaturated bond-containing group include a vinyl group, a (meth)allyl group, and a (meth)acryloyl group.

In Formula (SP-1), $A^1$ represents a group including the above-described functional group. As the functional group included in $A^1$, a heterocyclic group, an acid group, a group having a basic nitrogen atom, a hydrocarbon group having 4 or more carbon atoms, or a hydroxy group is preferable, and an acid group is more preferable. Examples of the acid group include a carboxyl group, a sulfo group, and a phosphoric acid group, and a carboxyl group is preferable.

It is sufficient that at least one of the above-described functional group is included in one $A^1$, and two or more substituents may be included in one $A^1$. $A^1$ preferably includes 1 to 10 of the above-described substituents, and more preferably includes 1 to 6 of the above-described substituents. In addition, as the group including the above-described functional group, which is represented by $A^1$, a group which is formed by the above-described functional group and a linking group including 1 to 200 carbon atoms, 0 to 20 nitrogen atoms, 0 to 100 oxygen atoms, 1 to 400 hydrogen atoms, and 0 to 40 sulfur atoms being bonded to each other can be used. Examples thereof include a group which is formed by one or more acid groups being bonded through a chain-like saturated hydrocarbon group having 1 to 10 carbon atoms, a cyclic saturated hydrocarbon group having 3 to 10 carbon atoms, or an aromatic hydrocarbon group having 5 to 10 carbon atoms. The chain-like saturated hydrocarbon group, the cyclic saturated hydrocarbon group, and the aromatic hydrocarbon group may further have a substituent. Examples of the substituent include an alkyl group having 1 to 20 carbon atoms, an aryl group having 6 to 16 carbon atoms, a hydroxy group, a carboxyl group, an amino group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonate group, and an ethylenically unsaturated bond-containing group. In addition, the above-described functional group itself may be $A^1$.

A chemical formula weight of $A^1$ is preferably 30 to 2,000. The upper limit is preferably 1,000 or less and more preferably 800 or less. The lower limit is preferably 50 or more and more preferably 100 or more.

In Formula (SP-1), $Z^1$ represents an (m+n)-valent linking group. Examples of the (m+n)-valent linking group include a group composed of 1 to 100 carbon atoms, 0 to 10 nitrogen atoms, 0 to 50 oxygen atoms, 1 to 200 hydrogen atoms, and 0 to 20 sulfur atoms. Examples of the (m+n)-valent linking group also include a group (which may form a ring structure) composed of the following structural unit or a combination of two or more the following structural units.

In the formulae, * represents a bonding site.

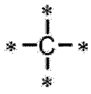 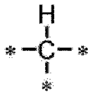 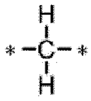

*-O-* *-S-*

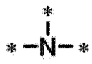 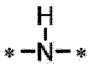 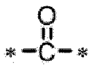 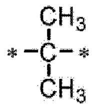

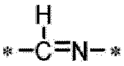 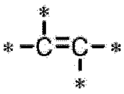 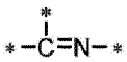 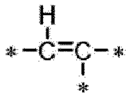 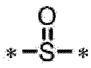 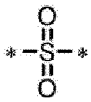 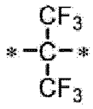

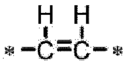 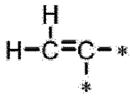

*-C≡C-*

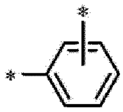 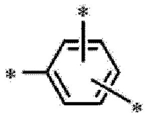

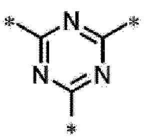 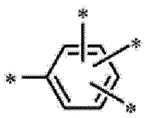 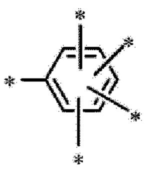 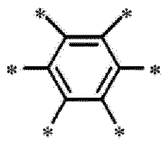

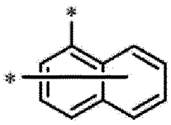 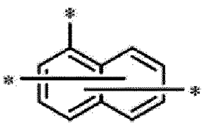 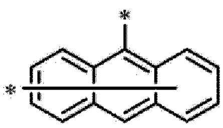

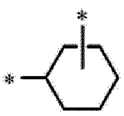 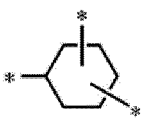 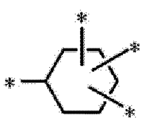 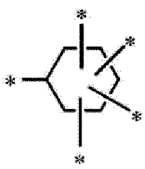 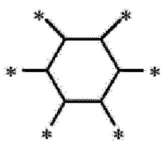

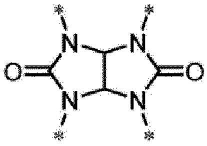 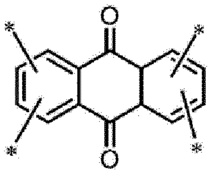 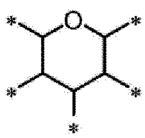

The (m+n)-valent linking group may have a substituent. Examples of the substituent include an alkyl group

having 1 to 20 carbon atoms, an aryl group having 6 to 16 carbon atoms, a hydroxy group, an amino group, a carboxyl group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonate group, and an ethylenically unsaturated bond-containing group.

It is preferable that the (m+n)-valent linking group represented by $Z^1$ is a group represented by any one of the following formulae.

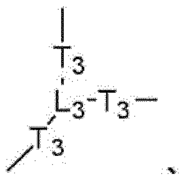 , 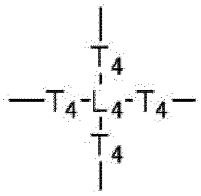 , 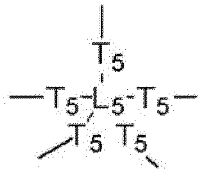 or 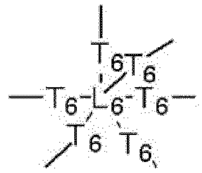

$L_3$ represents a trivalent group. $T_3$ represents a single bond or a divalent linking group, and in a case where three $T_3$'s are present, $T_3$'s may be the same as or different from each other.

$L_4$ represents a tetravalent group. $T_4$ represents a single bond or a divalent linking group, and in a case where four $T_4$'s are present, $T_4$'s may be the same as or different from each other.

$L_5$ represents a pentavalent group. $T_5$ represents a single bond or a divalent linking group, and in a case where five $T_5$'s are present, $T_5$'s may be the same as or different from each other.

$L_6$ represents a hexavalent group. $T_6$ represents a single bond or a divalent linking group, and in a case where six $T_6$'s are present, $T_6$'s may be the same as or different from each other.

Examples of the divalent linking group represented by $T_3$ to $T_6$ include $-CH_2-$, -O-, -CO-, -COO-, -OCO-, -NH-, an aliphatic ring group, an aromatic hydrocarbon ring group, a heterocyclic group, and a group consisting of a combination thereof. The aliphatic ring group, the aromatic hydrocarbon ring group, or the heterocyclic group may be a monocycle or a fused ring. The divalent linking group may further have the above-described substituent.

Examples of the trivalent group represented by $L_3$ include a group obtained by removing one hydrogen atom from the above-described divalent linking group. Examples of the tetravalent group represented by $L_4$ include a group obtained by removing two hydrogen atoms from the above-described divalent linking group. Examples of the pentavalent group represented by $L_5$ include a group obtained by removing three hydrogen atoms from the above-described divalent linking group. Examples of the hexavalent group represented by $L_6$ include a group obtained by removing four hydrogen atoms from the above-described divalent linking group. The trivalent to hexavalent groups represented by $L_3$ to $L_6$ may further have the above-described substituent.

A chemical formula weight of $Z^1$ is preferably 20 to 3,000. The upper limit is preferably 2,000 or less and more preferably 1,500 or less. The lower limit is preferably 50 or more and more preferably 100 or more. The chemical formula weight of $Z^1$ is a value calculated from the structural formula.

Specific examples of the (m+n)-valent linking group can be found in paragraphs "0043" to "0055" of JP2014-177613A, the content of which is incorporated herein by reference.

In Formula (SP-1), $Y^1$ and $Y^2$ each independently represent a single bond or a linking group. Examples of the linking group include a group composed of 1 to 100 carbon atoms, 0 to 10 nitrogen atoms, 0 to 50 oxygen atoms, 1 to 200 hydrogen atoms, and 0 to 20 sulfur atoms. The above-described group may further have the above-described substituent. Specific examples of the linking group represented by $Y^1$ and $Y^2$ include a group composed of one of the following structural units or a combination of two or more of the structural units. In the formulae, * represents a bonding site.

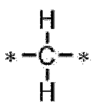 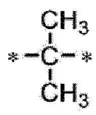

*-O-* *-S-*

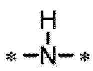 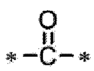 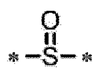 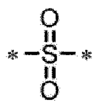

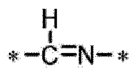 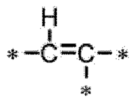 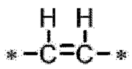 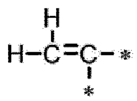 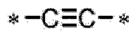

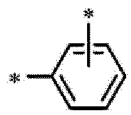 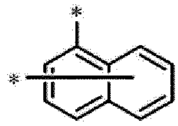 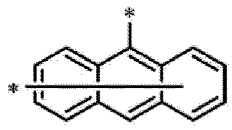 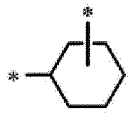

In Formula (SP-1), $P^1$ represents a polymer chain. The polymer chain represented by $P^1$ preferably includes a repeating unit having at least one structure selected from a polyether structure, a polyester structure, a poly(meth)acrylic structure, a polystyrene structure, a polyurethane structure, a polyurea structure, or a polyamide structure, more preferably includes a repeating unit having at least one structure selected from a polyether structure, a polyester structure, a poly(meth)acrylic structure, or a polystyrene structure, and still more preferably includes a poly(meth)acrylic structural repeating unit.

Examples of the polyester structural repeating unit include the repeating unit having a structure represented by Formula (G-1), Formula (G-4), or Formula (G-5) described above. Examples of the polyether structural repeating unit include the repeating unit having a structure represented by Formula (G-2) described above. Examples of the poly(meth)acrylic structural repeating unit include the repeating unit having a structure represented by Formula (G-3) described above. Examples of the polystyrene structural repeating unit include the repeating unit having a structure represented by Formula (G-6) described above.

The repetition number of repeating units in $P^1$ is preferably 3 to 2,000. The upper limit is preferably 1,500 or less and more preferably 1,000 or less. The lower limit is preferably 5 or more and more preferably 7 or more. In addition, it is also preferable that $P^1$ includes a repeating unit having an acid group. In addition, a proportion of the repeating unit having an acid group in all repeating units constituting $P^1$ is preferably 5 to 40 mol%, more preferably 10 to 30 mol%, and still more preferably 15 to 25 mol%.

A weight-average molecular weight of the polymer chain represented by $P^1$ is preferably 1,000 or more and more preferably 1,000 to 10,000. The upper limit is preferably 9,000 or less, more preferably 6,000 or less, and still more preferably 3,000 or less. The lower limit is preferably 1,200 or more and more preferably 1,400 or more. The weight-average molecular weight of $P^1$ is a value calculated from the weight-average molecular weight of a raw material used for introducing into the polymer chain.

Specific examples of the resin (SP-1) include polymer compounds C-1 to C-31 described in paragraphs "0196" to "0209" of JP2013-043962A, polymer compounds (C-1) to (C-61) described in paragraphs "0256" to "0269" of JP2014-177613A, and a resin having a structure described in paragraph "0061" of WO2018/163668A, the contents of which are incorporated herein by reference.

It is preferable that the composition for forming a film contains a resin as a dispersant and a resin as a binder, respectively. In addition, the resin as a binder preferably has low compatibility with the resin as a dispersant. By using such resins in combination, it is easy to form the phase-separated structure between the above-described phase A and the above-described phase B in the film formed of the composition for forming a film, and it is easy to improve the light scattering properties of the obtained film.

A content of the resin as a binder is preferably 50 to 300 parts by mass with respect to 100 parts by mass of the resin as a dispersant. The upper limit is preferably 250 parts by mass or less and more preferably 200 parts by mass or less. The lower limit is preferably 75 parts by mass or more and more preferably 100 parts by mass or more.

In addition, a content of the resin as a dispersant is preferably 10 to 50 parts by mass with respect to 100 parts by mass of the inorganic particles. The upper limit is preferably 40 parts by mass or less and more preferably 35 parts by mass or less. The lower limit is preferably 20 parts by mass or more and more preferably 25 parts by mass or more.

As the resin as a dispersant and the resin as a binder, the above-described resins can be appropriately selected and used. In addition, a commercially available product is also available as the dispersant, and specific examples thereof include DISPERBYK series (for example, DISPERBYK-111, 2001, and the like) manufactured by BYK-Chemie Japan K.K., Solsperse series (for example, Solsperse 20000, 76500, and the like) manufactured by Lubrizol Corporation, and AJISPER series manufactured by Ajinomoto Fine-Techno Co., Inc. In addition, products described in paragraph "0129" of JP2012-137564A and products described in paragraph "0235" of JP2017-194662A can also be used as the dispersant.

The composition for forming a film preferably contains the resin having a structure in which a plurality of polymer chains are bonded to a tri- or higher valent linking group and the resin including a repeating unit having a graft chain, respectively. According to this aspect, aggregation and the like of particles in the composition for forming a film can be suppressed more effectively, and excellent storage stability can be obtained. Furthermore, it is possible to easily form

the phase-separated structure between the phase A and the phase B in the film during film formation. In a case where the composition for forming a film contains the resin having a structure in which a plurality of polymer chains are bonded to a tri- or higher valent linking group and the resin including a repeating unit having a graft chain, it is preferable that any one of the resins is a dispersant and the other resin is a binder. In addition, it is preferable that the polymer chain in the resin having a structure in which a plurality of polymer chains are bonded to a tri- or higher valent linking group is a polymer chain including a repeating unit having a structure different from that of the graft chain in the resin including a repeating unit having a graft chain. Examples thereof include a combination in which the polymer chain in the resin having a structure in which a plurality of polymer chains are bonded to a tri- or higher valent linking group is a polymer chain including a polyether structural repeating unit, a polyester structural repeating unit, a poly (meth)acrylic structural repeating unit, or a polystyrene structural repeating unit, and the graft chain in the resin including a repeating unit having a graft chain is a graft chain including a repeating unit which has a structure different from that of the polymer chain and has a polyether structure, a polyester structure, a poly(meth)acrylic structure, or a polystyrene structure. In addition, a content of the resin having a structure in which a plurality of polymer chains are bonded to a tri- or higher valent linking group is preferably 50 to 300 parts by mass with respect to 100 parts by mass of the resin including a repeating unit having a graft chain. The upper limit is preferably 250 parts by mass or less and more preferably 200 parts by mass or less. The lower limit is preferably 75 parts by mass or more and more preferably 100 parts by mass or more. In addition, the total content of the resin having a structure in which a plurality of polymer chains are bonded to a tri- or higher valent linking group and the resin including a repeating unit having a graft chain in the resins contained in the composition for forming a film is preferably 3 mass% or more, more preferably 5 mass% or more, and still more preferably 10 mass% or more.

A content of the resin in the total solid content of the composition for forming a film is preferably 10 to 50 mass%. The lower limit is preferably 20 mass% or more and more preferably 25 mass% or more. The upper limit is preferably 40 mass% or less and more preferably 35 mass% or less.

«Polymerizable monomer»

The composition for forming a film preferably contains a polymerizable monomer. Examples of the polymerizable monomer include a compound having an ethylenically unsaturated bond-containing group. Examples of the ethylenically unsaturated bond-containing group include a vinyl group, a (meth)allyl group, and a (meth)acryloyl group.

A molecular weight of the polymerizable monomer is preferably 100 to 3,000. The upper limit is more preferably 2,000 or less and still more preferably 1,500 or less. The lower limit is more preferably 150 or more and still more preferably 250 or more.

A solubility parameter of the polymerizable monomer is preferably 9.0 to 12.0 $(cal/cm^3)^{0.5}$. The upper limit is preferably 11.5 $(cal/cm^3)^{0.5}$ or less and more preferably 11.0 $(cal/cm^3)^{0.5}$ or less. The lower limit is preferably 9.5 $(cal/cm^3)^{0.5}$ or more and more preferably 9.7 $(cal/cm^3)^{0.5}$ or more. In the present specification, the value of the solubility parameter of the polymerizable monomer is a calculated value based on the Fedors method.

The polymerizable monomer is preferably a compound including 3 or more ethylenically unsaturated bond-containing groups, more preferably a compound including 3 to 15 ethylenically unsaturated bond-containing groups, and still more preferably a compound including 3 to 6 ethylenically unsaturated bond-containing groups. In addition, the polymerizable monomer is preferably a (meth)acrylate compound having 3 to 15 functional groups and more preferably a (meth)acrylate compound having 3 to 6 functional groups. Specific examples of the polymerizable monomer include the compounds described in paragraphs "0095" to "0108" of JP2009-288705A, paragraph "0227" of JP2013-029760A, paragraphs "0254" to "0257" of JP2008-292970A, paragraphs "0034" to "0038" of JP2013-253224A, paragraph "0477" of JP2012-208494A, JP2017-048367A, JP6057891B, JP6031807B, and JP2017-194662A, the contents of which are incorporated herein by reference.

As the polymerizable monomer, dipentaerythritol tri(meth)acrylate (as a commercially available product, KAYARAD D-330 manufactured by Nippon Kayaku Co., Ltd.), dipentaerythritol tetra(meth)acrylate (as a commercially available product, KAYARAD D-320 manufactured by Nippon Kayaku Co., Ltd.), dipentaerythritol penta(meth)acrylate (as a commercially available product, KAYARAD D-310 manufactured by Nippon Kayaku Co., Ltd.), dipentaerythritol hexa(meth)acrylate (as a commercially available product, KAYARAD DPHA manufactured by Nippon Kayaku Co., Ltd., NK ESTER A-DPH-12E manufactured by Shin-Nakamura Chemical Co., Ltd.), or a compound having a structure in which these (meth)acryloyl groups are bonded through an ethylene glycol and/or a propylene glycol residue (for example, SR454 and SR499 which are commercially available products from Sartomer Company Inc.) is preferable.

In addition, as the polymerizable monomer, diglycerin ethylene oxide (EO)-modified (meth)acrylate (as a commercially available product, M-460 manufactured by TOAGOSEI CO., LTD.), pentaerythritol tetraacrylate (NK ESTER A-TMMT manufactured by Shin-Nakamura Chemical Co., Ltd.), 1,6-hexanediol diacrylate (KAYARAD HDDA manufactured by Nippon Kayaku Co., Ltd.), RP-1040 (manufactured by Nippon Kayaku Co., Ltd.), DPHA-40H (manufactured by Nippon Kayaku Co., Ltd.), ARONIX TO-2349 (manufactured by TOAGOSEI CO., LTD.), NK OLIGO UA-7200 (manufactured by Shin-Nakamura Chemical Co., Ltd.), 8UH-1006 and 8UH-1012 (manufactured by Taisei Fine Chemical Co., Ltd.), Light Acrylate POB-A0, UA-306H, UA-306T, UA-306I, AH-600, T-600, AI-600, and LINC-202UA (all of which are manufactured by KYOEISHA CHEMICAL Co., LTD.), and the like can also be used.

As the polymerizable monomer, it is also preferable to use a trifunctional (meth)acrylate compound such as trimethylolpropane tri(meth)acrylate, trimethylolpropane propyleneoxide-modified tri(meth)acrylate, trimethylolpropane ethyleneoxide-modified tri(meth)acrylate, isocyanuric acid ethyleneoxide-modified tri(meth)acrylate, and pentaerythritol tri(meth)acrylate. Examples of a commercially available product of the trifunctional (meth)acrylate compound include ARONIX M-309, M-310, M-321, M-350, M-360, M-313, M-315, M-306, M-305, M-303, M-452, and M-450 (manufactured by TOAGOSEI CO., LTD.), NK ESTER A9300, A-GLY-9E, A-GLY-20E, A-TMM-3, A-TMM-3L, A -TMM-3LM-N, A-TMPT, and TMPT (manufactured by Shin-Nakamura Chemical Co., Ltd.), and KAYARAD GPO-303, TMPTA, THE-330, TPA-330, and PET-30 (manufactured by Nippon Kayaku Co., Ltd.).

As the polymerizable monomer, a polymerizable monomer having an acid group can also be used. Examples of the acid group include a carboxyl group, a sulfo group, and a phosphoric acid group, and a carboxyl group is preferable. Examples of a commercially available product of the polymerizable monomer having an acid group include ARONIX M-305, M-510, M-520, and ARONIX TO-2349 (manufactured by TOAGOSEI CO., LTD). An acid value of the polymerizable monomer having an acid group is preferably 0.1 to 40 mgKOH/g and more preferably 5 to 30 mgKOH/g.

As the polymerizable monomer, a polymerizable monomer having a caprolactone structure can also be used. Examples of the polymerizable monomer having a caprolactone structure include DPCA-20, DPCA-30, DPCA-60, and DPCA-120, each of which is commercially available as KAYARAD DPCA series from Nippon Kayaku Co., Ltd.

As the polymerizable monomer, a polymerizable monomer having a fluorene skeleton can also be used. Examples of a commercially available product of the polymerizable monomer having a fluorene skeleton include OGSOL EA-0200 and EA-0300 (manufactured by Osaka Gas Chemicals Co., Ltd., a (meth)acrylate monomer having a fluorene skeleton).

As the polymerizable monomer, it is also preferable to use a compound which does not substantially include environmentally regulated substances such as toluene. Examples of a commercially available product of such a compound include KAYARAD DPHA LT and KAYARAD DPEA-12 LT (manufactured by Nippon Kayaku Co., Ltd.).

The urethane acrylates described in JP1973-041708B (JP-S48-041708B), JP1976-037193A (JP-S51-037193A), JP1990-032293B (JP-H02-032293B), or JP1990-016765B (JP-H02-016765B), or the urethane compounds having an ethylene oxide skeleton described in JP1983-049860B (JP-S58-049860B), JP1981-017654B (JP-S56-017654B), JP1987-039417B (JP-S62-039417B), or JP1987-039418B (JP-S62-039418B) are also suitable as the polymerizable monomer. In addition, the polymerizable monomers having an amino structure or a sulfide structure in the molecule, described in JP1988-277653A (JP-S63-277653A), JP1988-260909A (JP-S63-260909A), or JP1989-105238A (JP-H01-105238A), are also preferably used. In addition, as the polymerizable monomer, commercially available products such as UA-7200 (manufactured by Shin-Nakamura Chemical Co., Ltd.), DPHA-40H (manufactured by Nippon Kayaku Co., Ltd.), and UA-306H, UA-306T, UA-306I, AH-600, T-600, AI-600, and LINC-202UA (manufactured by KYOEISHA CHEMICAL Co., Ltd.) can also be used.

A content of the polymerizable monomer in the total solid content of the composition for forming a film is preferably 0.1 to 40 mass%. The lower limit is preferably 0.5 mass% or more and more preferably 1 mass% or more. The upper limit is preferably 30 mass% or less and more preferably 20 mass% or less.

In addition, the content of the polymerizable monomer is preferably 20 to 100 parts by mass with respect to 100 parts by mass of the resin. The lower limit is preferably 40 parts by mass or more and more preferably 60 parts by mass or more. The upper limit is preferably 85 parts by mass or less and more preferably 70 parts by mass or less.

«Photopolymerization initiator»

In a case where the composition for forming a film contains the polymerizable monomer, it is preferable that the composition for forming a film further contains a photopolymerization initiator. The photopolymerization initiator is not particularly limited and can be appropriately selected from known photopolymerization initiators. For example, a compound having photosensitivity to light in a range from an ultraviolet range to a visible range is preferable. The photopolymerization initiator is preferably a photoradical polymerization initiator.

Examples of the photopolymerization initiator include a halogenated hydrocarbon derivative (for example, a compound having a triazine skeleton or a compound having an oxadiazole skeleton), an acylphosphine compound, a hexaarylbiimidazole, an oxime compound, an organic peroxide, a thio compound, a ketone compound, an aromatic onium salt, an $\alpha$-hydroxyketone compound, and an $\alpha$-aminoketone compound. In addition, from the viewpoint of exposure sensitivity, as the photopolymerization initiator, a trihalomethyltriazine compound, a benzyldimethylketal compound, an $\alpha$-hydroxyketone compound, an $\alpha$-aminoketone compound, an acylphosphine compound, a phosphine oxide compound, a metallocene compound, an oxime compound, a triarylimidazole dimer, an onium compound, a benzothiazole compound, a benzophenone compound, an acetophenone compound, a cyclopentadiene-benzene-iron complex, a halomethyl oxadiazole compound, or a 3-aryl-substituted coumarin compound is preferable; a compound selected from the group consisting of an oxime compound, an α-hydroxyketone compound, an α-aminoketone compound, and an acylphosphine compound is more preferable; an oxime compound or an acylphosphine compound is still more preferable; and an acylphosphine compound is particularly preferable. By using the acylphosphine compound as the photopolymerization initiator, it is possible to obtain an effect that coloration caused by the photopolymerization initiator can be suppressed. In addition, as the photopolymerization initiator, compounds described in paragraphs 0065 to 0111 of JP2014-130173A, compounds described in JP6301489B, peroxide-based photopolymerization initiators described in MATERIAL STAGE, p. 37 to 60, vol. 19, No. 3, 2019, photopolymerization initiators described in WO2018/221177A, photopolymerization initiators described in WO2018/110179A, photopolymerization initiators described in JP2019-043864A, photopolymerization initiators described in JP2019-044030A, peroxide initiators described in JP2019-167313A, aminoacetophenone-based initiators described in JP2020-055992A, and oxime-based photopolymerization initiators described in JP2013-190459A, the contents of which are incorporated herein by reference.

Examples of a commercially available product of the α-hydroxyketone compound include Omnirad 184, Omnirad 1173, Omnirad 2959, and Omnirad 127 (all of which are manufactured by IGM Resins B.V), Irgacure 184, Irgacure 1173, Irgacure 2959, and Irgacure 127 (all of which are manufactured by BASF). Examples of a commercially available product of the α-aminoketone compound include Omnirad 907, Omnirad 369, Omnirad 369E, and Omnirad 379EG (all of which are manufactured by IGM Resins B.V), Irgacure 907, Irgacure 369, Irgacure 369E, and Irgacure 379EG (all of which are manufactured by BASF). Examples of a commercially available product of the acylphosphine compound include Omnirad 819 and Omnirad TPO H (both of which are manufactured by IGM Resins B.V), Irgacure 819 and Irgacure TPO (both of which are manufactured by BASF).

Examples of the oxime compound include the compounds described in JP2001-233842A, the compounds described in JP2000-080068A, the compounds described in JP2006-342166A, the compounds described in J. C. S. Perkin II (1979, pp. 1653 to 1660), the compounds described in J. C. S. Perkin II (1979, pp. 156 to 162), the compounds described in Journal of Photopolymer Science and Technology (1995, pp. 202 to 232), the compounds described in JP2000-066385A, the compounds described in JP2004-534797A, the compounds described in JP2006-342166A, the compounds described in JP2017-019766A, the compounds described in JP6065596B, the compounds described in WO2015/152153A, the compounds described in WO2017/051680A, the compounds described in JP2017-198865A, the compounds described in paragraph "0025" to 0038" of WO2017/164127A, and the compounds described in WO2013/167515A. Specific examples of the oxime compound include 3-benzoyloxyiminobutane-2-one, 3-acetoxyiminobutane-2-one, 3-propionyloxyiminobutane-2-one, 2-acetoxyiminopentane-3-one, 2-acetoxyimino-1-phenylpropane-1 -one, 2-benzoyloxyimino-1-phenylpropane-1-one, 3-(4-toluene sulfonyloxy)iminobutane-2-one, 2-ethoxycarbonyloxyimino-1-phenylpropane-1-one, and 1-[4-(phenylthio)phenyl]-3-cyclohexyl-propane-1,2-dione-2-(O-acetyloxime). Examples of a commercially available product thereof include Irgacure OXE01, Irgacure OXE02, Irgacure OXE03, and Irgacure OXE04 (all of which are manufactured by BASF), TR-PBG-304 and TR-PBG-327 (manufactured by TRONLY), and ADEKA OPTOMER N-1919 (manufactured by ADEKA Corporation; photopolymerization initiator 2 described in JP2012-014052A). In addition, as the oxime compound, it is also preferable to use a compound having no colorability or a compound having high transparency and being resistant to discoloration. Examples of a commercially available product of the oxime compound include ADEKA ARKLS NCI-730, NCI-831, and NCI-930 (all of which are manufactured by Adeka Corporation).

An oxime compound having a fluorene ring can also be used as the photopolymerization initiator. Specific examples of the oxime compound having a fluorene ring include compounds described in JP2014-137466A, compounds described in JP6636081B, and compounds described in KR10-2016-0109444A.

As the photopolymerization initiator, an oxime compound having a skeleton in which at least one benzene ring of a carbazole ring is a naphthalene ring can also be used. Specific examples of such an oxime compound include the compounds described in WO2013/083505A.

An oxime compound having a fluorine atom can also be used as the photopolymerization initiator. Specific examples of the oxime compound having a fluorine atom include a compound described in JP2010-262028A, Compound 24 and 36 to 40 described in JP2014-500852A, and Compound (C-3) described in JP2013-164471A.

An oxime compound having a nitro group can be used as the photopolymerization initiator. It is preferable that the oxime compound having a nitro group is a dimer. Specific examples of the oxime compound having a nitro group include a compound described in paragraphs "0031" to "0047" of JP2013-114249A and paragraphs "0008" to "0012" and "0070" to "0079" of JP2014-137466A, a compound described in paragraphs "0007" to 0025" of JP4223071B, and ADEKAARKLS NCI-831 (manufactured by Adeka Corporation).

An oxime compound having a benzofuran skeleton can also be used as the photopolymerization initiator. Specific examples thereof include OE-01 to OE-75 described in WO2015/036910A.

As the photopolymerization initiator, an oxime compound in which a substituent having a hydroxyl group is bonded to a carbazole skeleton can also be used. Examples of such a photopolymerization initiator include compounds described in WO2019/088055A.

Specific examples of the oxime compound include compounds having the following structures.

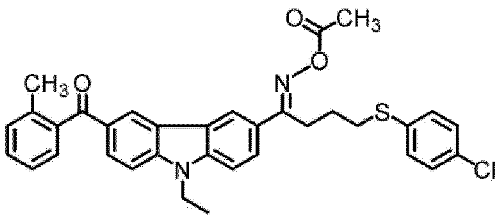

(C-1)

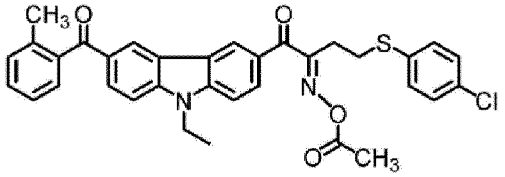

(C-2)

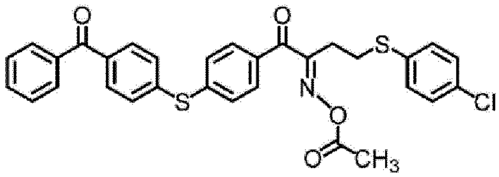

(C-3)

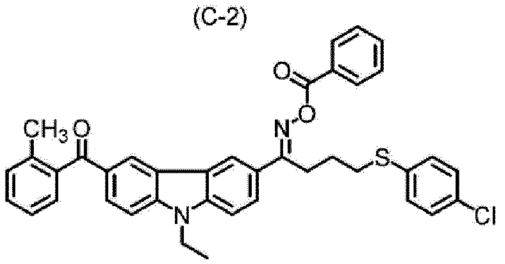

(C-4)

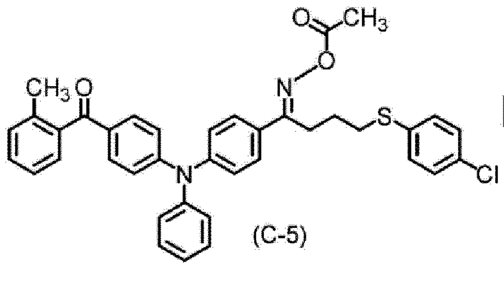

(C-5)

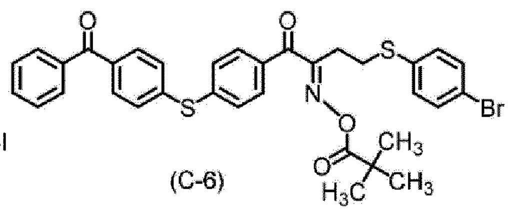

(C-6)

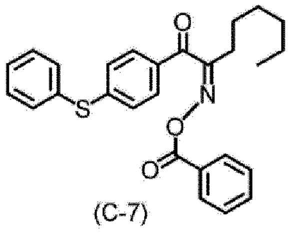

(C-7)

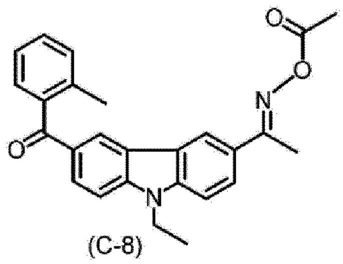

(C-8)

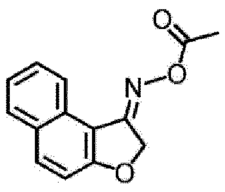

(C-9)

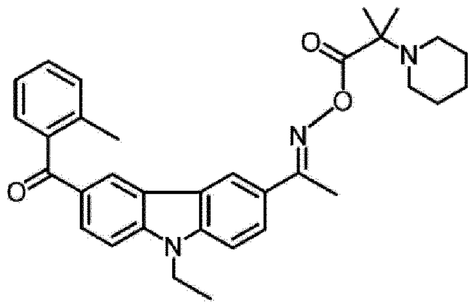

(C-10)

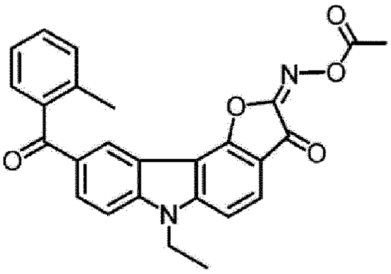

(C-11)

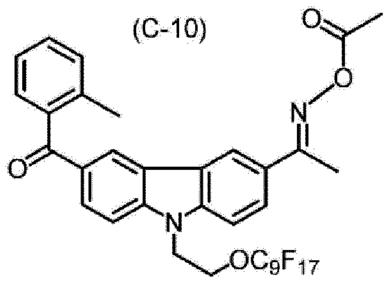

(C-12)

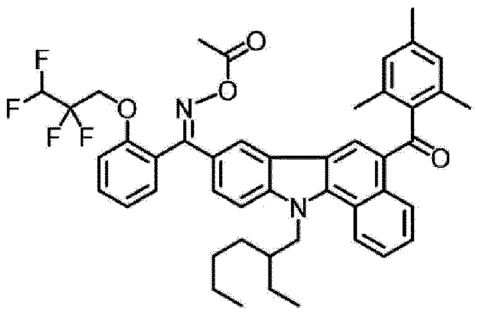

(C-13)

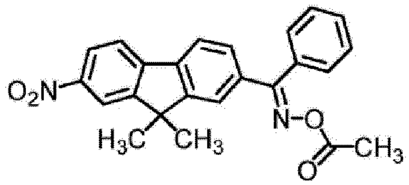

(C-14)

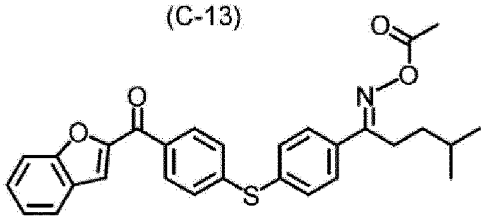

(C-15)

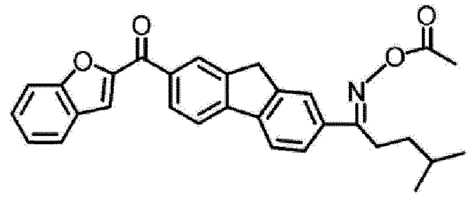

(C-16)

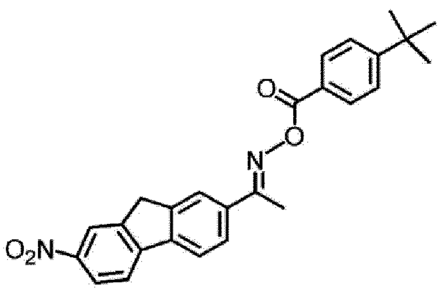

(C-17)

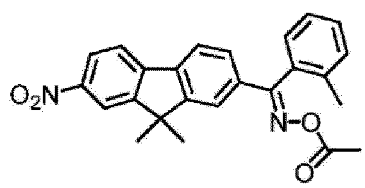

(C-18)

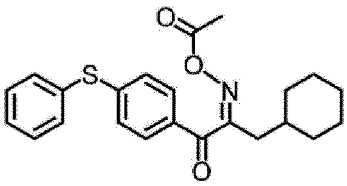

(C-19)

The oxime compound is preferably a compound having a maximal absorption wavelength in a wavelength in a range of 350 to 500 nm and more preferably a compound having a maximal absorption wavelength in a wavelength in a range of 360 to 480 nm. In addition, from the viewpoint of sensitivity, the molar absorption coefficient of the oxime compound at a wavelength of 365 nm or 405 nm is preferably high, more preferably 1,000 to 300,000, still more preferably 2,000 to 300,000, and particularly preferably 5,000 to 200,000. The molar absorption coefficient of the compound can be measured using a known method. For example, it is preferable that the molar absorption coefficient can be measured using a spectrophotometer (Cary-5 spectrophotometer, manufactured by Varian Medical Systems, Inc.) and an ethyl acetate solvent at a concentration of 0.01 g/L.

As the photopolymerization initiator, a bifunctional or tri- or higher functional photoradical polymerization initiator may be used. By using such a photoradical polymerization initiator, two or more radicals are generated from one molecule of the photoradical polymerization initiator, and as a result, good sensitivity is obtained. In addition, in a case of using a compound having an asymmetric structure, crystallinity is reduced so that solubility in a solvent or the like is improved, precipitation is to be difficult over time, and temporal stability of the resin composition can be improved. Specific examples of the bifunctional or tri- or higher functional photoradical polymerization initiator include dimers of the oxime compounds described in JP2010-527339A, JP2011-524436A, WO2015/004565A, paragraphs "0407" to "0412" of JP2016-532675A, and paragraphs "0039" to "0055" of WO2017/033680A; the compound (E) and compound (G) described in JP2013-522445A; Cmpd 1 to 7 described in WO2016/034963A; the oxime ester photoinitiators described in paragraph "0007" of JP2017-523465A; the photoinitiators described in paragraphs "0020" to "0033" of JP2017-167399A; the photopolymerization initiator (A) described in paragraphs "0017" to "0026" of JP2017-151342A; and the oxime ester photoinitiators described in JP6469669B.

A content of the photopolymerization initiator in the total solid content of the composition for forming a film is preferably 0.1 to 30 mass%, more preferably 0.5 to 20 mass%, and still more preferably 1 to 15 mass%. The composition for forming a film may contain one photopolymerization initiator or two or more photopolymerization initiators. In a case of containing two or more photopolymerization initiators, it is preferable that the total content of the photopolymerization initiators is within the above-described range.

<<Compound having cyclic ether group>>

The composition for forming a film can also contain a compound having a cyclic ether group. Examples of the cyclic ether group include an epoxy group and an oxetanyl group.

Examples of the compound having a cyclic ether group include a compound having one or more cyclic ether groups in one molecule. Among these, a compound having two or more cyclic ether groups in one molecule is preferable. The compound having a cyclic ether group preferably has 1 to 100 cyclic ether group in one molecule. The upper limit of the number of cyclic ether groups may be, for example, 10 or less or 5 or less. The lower limit of the number of cyclic ether groups is preferably 2 or more.

Examples of a commercially available product of the compound having an epoxy group include commercially available products described in paragraph 0189 of JP2011-221494A, such as JER828, JER1007, JER157S70 (manufactured by Mitsubishi Chemical Corporation) and JER157S65 (manufactured by Mitsubishi Chemical Holdings Corporation). Examples of other commercially available products include ADEKA RESIN EP-4000S, EP-40035, EP-4010S, and EP-4011S (all of which are manufactured by ADEKA Corporation); NC-2000, NC-3000, NC-7300, XD-1000, EPPN-501, and EPPN-502 (all of which are manufactured by ADEKA Corporation); DENACOL EX-611, EX-612, EX-614, EX-614B, EX-622, EX-512, EX-521, EX-411, EX-421, EX-313, EX-314, EX-321, EX-211, EX-212, EX-810, EX-811, EX-850, EX-851, EX-821, EX-830, EX-832, EX-841, EX-911, EX -941, EX-920, EX-931, EX-212L, EX-214L, EX-216L, EX-321L, EX-850L, DLC-201, DLC-203, DLC-204, DLC-205, DLC-206, DLC-301, DLC-402, EX-111, EX-121, EX-141, EX-145, EX-146, EX-147, EX-171, and EX-192 (all of which are manufactured by Nagase ChemteX Corporation); YH-300, YH-301, YH-302, YH-315, YH-324, and YH-325 (all of which are manufactured by NIPPON STEEL Chemical & Material Co., Ltd.); CELLOXIDE 2021P, 2081, 2000, 3000, EHPE3150, EPOLEAD GT400, CELVENUS B0134, and B0177 (manufactured by DAICEL CORPORATION); and TETRAD-X (manufactured by MITSUBISHI GAS CHEMICAL COMPANY, INC.).

Examples of a commercially available product of the compound having an oxetanyl group include OXT-201, OXT-211, OXT-212, OXT-213, OXT-121, OXT-221, and OX-SQ TX-100 (all of which are manufactured by TOAGOSEI CO., LTD.).

A content of the compound having a cyclic ether group in the total solid content of the composition for forming a film is preferably 0.1 to 40 mass%. The lower limit is preferably 0.5 mass% or more and more preferably 1 mass% or more. The upper limit is preferably 30 mass% or less and more preferably 20 mass% or less.

<<Solvent>>

The composition for forming a film preferably contains a solvent. Examples of the solvent include an organic solvent. Basically, the solvent is not particularly limited as long as it satisfies the solubility of the respective components and the application properties of the composition. Examples of the organic solvent include an ester solvent, a ketone solvent, an alcohol solvent, an amide solvent, an ether solvent, and a hydrocarbon solvent. The details of the organic solvent can be found in paragraph "0223" of WO2015/166779A, the content of which is incorporated herein by reference. In addition, an ester solvent in which a cyclic alkyl group is substituted or a ketone solvent in which a cyclic alkyl group is substituted can also be preferably used. Specific examples of the organic solvent include polyethylene glycol monomethyl ether, dichloromethane, methyl 3-ethoxypropionate, ethyl 3-ethoxypropionate, ethyl cellosolve acetate, ethyl lactate, diethylene glycol dimethyl ether, butyl acetate, methyl 3-methoxypropionate, 2-heptanone, 2-pentanone, 3-pentanone, 4-heptanone, cyclohexanone, 2-methylcyclohexanone, 3-methylcyclohexanone, 4-methylcyclohexanone, cycloheptanone, cyclooctanone, cyclohexyl acetate, cyclopentanone, ethylcarbitol acetate, butylcarbitol acetate, propylene glycol monomethyl ether, propylene glycol monomethyl ether acetate, 3-methoxy-N,N-dimethylpropanamide, 3-butoxy-N,N-dimethylpropanamide, propylene glycol diacetate, 3-methoxybutanol, methyl ethyl ketone, γ-butyrolactone, sulfolane, anisole, 1,4-diacetoxybutane, diethylene glycol monoethyl ether acetate, butane diacetate-1,3-diyl, dipropylene glycol methyl ether acetate, diacetone alcohol (also known as diacetone alcohol or 4-hydroxy-4-methyl-2-pentanone), 2-methoxypropyl acetate, 2-methoxy-1-propanol, and isopropyl alcohol. Among these organic solvents, one kind can be used alone, or a mixture of two or more kinds can be used.

For example, the metal content in the organic solvent is preferably 10 mass ppb (parts per billion) or lower. Optionally, an organic solvent having a metal content at a mass parts per trillion (ppt) level may be used. For example, such an organic solvent is available from Toyo Gosei Co., Ltd. (The Chemical Daily, November 13, 2015).

Examples of a method of removing impurities such as metal from the organic solvent include distillation (for example, molecular distillation or thin-film distillation) and filtering using a filter. The pore size of a filter used for the filtering is preferably 10 μm or less, more preferably 5 μm or less, and still more preferably 3 μm or less. As a material of the filter, polytetrafluoroethylene, polyethylene, or nylon is preferable.

The organic solvent may include an isomer (a compound having the same number of atoms and a different structure). In addition, the organic solvent may include only one isomer or a plurality of isomers.

The organic solvent preferably has the content of peroxides of 0.8 mmol/L or less, and it is more preferable that the organic solvent does not substantially include peroxides.

A content of the solvent in the composition for forming a film is preferably 10 to 95 mass%. The lower limit is preferably 20 mass% or more, more preferably 30 mass% or more, and still more preferably 40 mass% or more. The upper limit is preferably 90 mass% or less, more preferably 85 mass% or less, and still more preferably 80 mass% or less. As the solvent, one kind may be used alone, or two or more kinds may be used in combination. In a case where two or more solvents are used in combination, it is preferable that the total content of the solvents is within the above-described range.

<<Antioxidant>>

The composition for forming a film can contain an antioxidant. Examples of the antioxidant include a phenol compound, a phosphite compound, and a thioether compound. Among these, a phenol compound having a molecular weight of 500 or more, a phosphite compound having a molecular weight of 500 or more, or a thioether compound having a molecular weight of 500 or more is more preferable. In addition, the antioxidant is preferably a phenol compound, and more preferably a phenol compound having a molecular weight of 500 or more.

As the phenol compound, any phenol compound which is known as a phenol-based antioxidant can be used. As the phenol compound, for example, a hindered phenol compound is preferable. In particular, a compound having a substituent at a position (ortho position) adjacent to a phenolic hydroxy group is preferable. As the substituent, a substituted or unsubstituted alkyl group having 1 to 22 carbon atoms is preferable. In addition, a compound having a phenol group and a phosphite group in the same molecule is also preferable.

As the phenolic hydroxy group-containing compound, in particular, a polysubstituted phenol compound is suitably used. The polysubstituted phenol compound can be classified into three types (a hindered type represented by the

following Formula (A), a semi-hindered type represented by the following Formula (B), and a less-hindered type represented by the following Formula (C)) having different substitution sites and different structures in terms of reactivity to a peroxy radical trapped for the stable generation of a phenoxy radical.

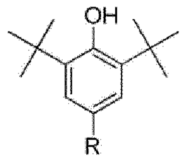
(A)

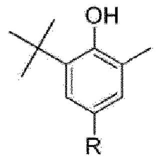
(B)

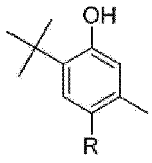
(C)

In Formulae (A) to (C), R represents a hydrogen atom or a substituent. R represents preferably a hydrogen atom, a halogen atom, an amino group which may have a substituent, an alkyl group which may have a substituent, an aryl group which may have a substituent, an alkoxy group which may have a substituent, an aryloxy group which may have a substituent, an alkylamino group which may have a substituent, an arylamino group which may have a substituent, an alkylsulfonyl group which may have a substituent, or an arylsulfonyl group which may have a substituent, and more preferably an amino group which may have a substituent, an alkyl group which may have a substituent, an aryl group which may have a substituent, an alkoxy group which may have a substituent, an aryloxy group which may have a substituent, an alkylamino group which may have a substituent, or an arylamino group which may have a substituent.

A composite antioxidant in which a plurality of structures represented by Formulae (A) to (C) having an antioxidant function are present in the same molecule is still more preferable. Specifically, a compound in which 2 to 4 structures represented by Formulae (A) to (C) having an antioxidant function are present in the same molecule is preferable. Among these, the semi-hindered type represented by Formula (B) is more preferable from the viewpoint of colorability. Representative examples of a commercially available product of (A) include SUMILIZER BHT (manufactured by Sumitomo Chemical Co., Ltd.), IRGANOX 1010 and 1222 (manufactured by BASF), and ADEKA STAB AO-20, AO-50, and AO-60 (manufactured by Adeka Corporation). Representative examples of a commercially available product of (B) include SUMILIZER BBM-S (manufactured by Sumitomo Chemical Co., Ltd.), IRGANOX 245 (manufactured by BASF), and ADEKA STAB AO-80 (manufactured by Adeka Corporation). Representative examples of a commercially available product of (C) include ADEKA STAB AO-30 and AO-40 (manufactured by Adeka Corporation).

Examples of the phosphite compound include tris[2-[[2,4,8,10-tetrakis(1,1-dimethylethyl)dibenzo[d,f][1,3,2]dioxaphosphepin-6-yl]oxy]ethyl ]amine, tris[2-[[4,6,9,11-tetra-tert-butyldibenzo[d,f][1,3,2]dioxaphosphepin-2-yl]oxy]ethyl]amine, and ethyl bis(2,4-di-tert-butyl-6-methylphenyl)phosphite. Representative examples of a commercially available product of a phosphite compound include ADEKA STAB PEP-36A (manufactured by Adeka Corporation).

Examples of the thioether compound include: dialkyl thiodipropionates such as dilauryl thiodipropionate, dimyristyl thiodipropionate, and distearyl thiodipropionate or pentaerythritol tetra(β-alkylthiopropionic acid) esters; pentaerythrityl tetrakis(3-laurylthiopropionate); and tetrakis[methylene-3-(laurylthio)propionate]methane, bis(methyl-4-[3-n-alkyl(C12/C14)thiopropionyloxoy]5-t-butylphenyl)sulfide, ditridecyl-3,3'-thiodipropionate, dilauryl-3,3'-thiodipropionate, dimyristyl 3,3'-thiodipropionate, distearyl 3,3'-thiodipropionate, lauryl/stearyl thiodipropionate, 4,4'-thiobis(6-t-butyl-metacresol), 2,2'-thiobis(6-t-butyl-paracresol), and distearyl-disulfide. Representative examples of a commercially available product of the thioether compound include ADEKA STAB AO-412S (CAS: 29598-76-3, manufactured by Adeka Corporation), ADEKA STAB AO-503 (CAS: 10595-72-9, manufactured by Adeka Corporation), and KEMINOX PLS (CAS: 29598-76-3, manufactured by Chemipro Kasei Ltd.).

In addition to the above-described representative examples, examples of a commercially available product of the antioxidant include ADEKA STAB AO-50F, ADEKA STAB AO-60G, and ADEKA STAB AO-330 (Adeka Corporation).

In addition, examples of the antioxidant include:

N-oxide compounds such as 5,5-dimethyl-1-pyrroline N-oxide, 4-methylmorpholine N-oxide, pyridine N-oxide, 4-nitropyridine N-oxide, 3-hydroxypyridine N-oxide, picolinic acid N-oxide, nicotinic acid N-oxide, and isonicotinic acid N-oxide;

piperidine-1-oxyl free radical compounds such as piperidine-1-oxyl free radical, 2,2,6,6-tetramethylpiperidine-1-oxyl free radical, 4-oxo-2,2,6,6-tetramethylpiperidine-1-oxyl free radical, 4-hydroxy-2,2,6,6-tetramethylpiperidine-1-oxyl free radical, 4-acetamide-2,2,6,6-tetramethylpiperidine-1-oxyl free radical, 4-maleimide-2,2,6,6-tetramethylpiperidine-1-oxyl free radical, and 4-phosphonooxy-2,2,6,6-tetramethylpiperidine-1-oxyl free radical;

pyrrolidine 1-oxyl free radical compounds such as 3-carboxy proxyl free radical and 3-carboxy-2,2,5,5-tetramethylpyrrolidine 1-oxyl free radical;

N-nitrosophenylhydroxyamines such as N-nitrosophenylhydroxyamine cerous salt and N-nitrosophenylhydroxyamine aluminum salt;

diazonium compounds such as 4-diazophenyldimethylamine hydrogensulfate, 4-diazodiphenylamine tetrafluoroborate, and 3-methoxy-4-diazodiphenylamine hexafluorophosphate;
cationic dyes;
nitro group-containing compounds; and
transition metal compounds such as $FeCl_3$ and $CuCl_2$. The details can be found in the description of compounds described in paragraphs "0211' to "0223" of JP2015-034961A, the content of which is incorporated herein by reference.

A content of the antioxidant in the total solid content of the composition for forming a film is preferably 0.01 to 20 mass%, more preferably 0.1 to 15 mass%, and still more preferably 0.3 to 5 mass%. As the antioxidant, one kind may be used alone, or two or more kinds may be used in combination. In a case where two or more kinds thereof are used in combination, it is preferable that the total content of the two or more kinds thereof is within the above-described range.

«Ultraviolet absorber»

The composition for forming a film can contain an ultraviolet absorber. Examples of the ultraviolet absorber include a conjugated diene compound, an aminodiene compound, a salicylate compound, a benzophenone compound, a benzotriazole compound, an acrylonitrile compound, a hydroxyphenyltriazine compound, an indole compound, and a triazine compound. Specific examples of such a compound include compounds described in paragraphs "0038" to "0052" of JP2009-217221A, paragraphs "0052" to "0072" of JP2012-208374A, paragraphs "0317" to "0334" of JP2013-068814A, and paragraphs "0061" to "0080" of JP2016-162946A, the contents of which are incorporated herein by reference. Examples of a commercially available product of the ultraviolet absorber include UV-503 (manufactured by Daito Chemical Co., Ltd.), Tinuvin series and Uvinul series manufactured by BASF SE, and Sumisorb series manufactured by Sumika Chemtex Co., Ltd. In addition, examples of the benzotriazole compound include MYUA series manufactured by Miyoshi Oil & Fat Co., Ltd. (The Chemical Daily, February 1, 2016). In addition, as the ultraviolet absorber, compounds described in paragraphs "0049" to "0059" of JP6268967B, compounds described in paragraphs "0059" to "0076" of WO2016/181987A, and thioaryl group-substituted benzotriazole type ultraviolet absorbers described in WO2020/137819A can also be used.

A content of the ultraviolet absorber in the total solid content of the composition for forming a film is preferably 0.1 to 10 mass%, more preferably 0.1 to 7 mass%, still more preferably 0.1 to 5 mass%, and particularly preferably 0.1 to 3 mass%. As the ultraviolet absorber, one kind may be used alone, or two or more kinds may be used in combination. In a case where two or more kinds thereof are used in combination, it is preferable that the total content of the two or more kinds thereof is within the above-described range.

<<Silane coupling agent>>

The composition for forming a film can contain a silane coupling agent. In this specification, the silane coupling agent refers to a silane compound having a functional group other than a hydrolyzable group. In addition, the hydrolyzable group refers to a substituent directly linked to a silicon atom and capable of forming a siloxane bond due to at least one of a hydrolysis reaction or a condensation reaction. Examples of the hydrolyzable group include a halogen atom, an alkoxy group, and an acyloxy group.
Among these, an alkoxy group is preferable. That is, it is preferable that the silane coupling agent is a compound having an alkoxysilyl group. Examples of the functional group other than a hydrolyzable group include a vinyl group, a (meth)allyl group, a (meth)acryloyl group, a mercapto group, an epoxy group, an oxetanyl group, an amino group, an ureide group, a sulfide group, an isocyanate group, and a phenyl group. Among these, an amino group, a (meth)acryloyl group, or an epoxy group is preferable. Specific examples of the silane coupling agent include N-β-aminoethyl-γ-aminopropyl methyldimethoxysilane (trade name: KBM-602, manufactured by Shin-Etsu Chemical Co., Ltd.), N-β-aminoethyl-γ-aminopropyl trimethoxysilane (trade name: KBM-603, manufactured by Shin-Etsu Chemical Co., Ltd.), N-β-aminoethyl-γ-aminopropyl triethoxysilane (trade name: KBE-602, manufactured by Shin-Etsu Chemical Co., Ltd.), γ-aminopropyl trimethoxysilane (trade name: KBM-903, manufactured by Shin-Etsu Chemical Co., Ltd.), γ-aminopropyl triethoxysilane (trade name: KBE-903, manufactured by Shin-Etsu Chemical Co., Ltd.), 3-methacryloxypropyl methyldimethoxysilane (trade name: KBM-502, manufactured by Shin-Etsu Chemical Co., Ltd.), and 3-methacryloxypropyl trimethoxysilane (trade name: KBM-503, manufactured by Shin-Etsu Chemical Co., Ltd.). In addition, specific examples of the silane coupling agent include a compound described in paragraphs "0018" to "0036" of JP2009-288703A and a compound described in paragraphs "0056" to "0066" of JP2009-242604A, the contents of which are incorporated herein by reference.

A content of the silane coupling agent in the total solid content of the composition for forming a film is preferably 0.01 to 10 mass%, more preferably 0.1 to 7 mass%, and still more preferably 1 to 6 mass%. As the silane coupling

agent, one kind may be used alone, or two or more kinds may be used in combination. In a case where two or more kinds thereof are used in combination, it is preferable that the total content of the two or more kinds thereof is within the above-described range.

<<Surfactant>>

The composition for forming a film can contain a surfactant. As the surfactants, various surfactants such as a fluorine-based surfactant, a nonionic surfactant, a cationic surfactant, an anionic surfactant, or a silicone-based surfactant can be used. The surfactant is preferably a silicone-based surfactant or a fluorine-based surfactant. Examples of the surfactant include surfactants described in paragraphs "0238" to "0245" of WO2015/166779A, the contents of which are incorporated herein by reference.

The fluorine content in the fluorine-based surfactant is preferably 3 to 40 mass%, more preferably 5 to 30 mass%, and still more preferably 7 to 25 mass%. The fluorine-based surfactant in which the fluorine content is in the above-described range is effective from the viewpoints of the uniformity in the thickness of the coating film and liquid saving properties, and the solubility thereof in the coloring composition is also excellent.

Examples of the fluorine-based surfactant include surfactants described in paragraphs "0060" to "0064" of JP2014-041318A (paragraphs "0060" to "0064" of the corresponding WO2014/017669A) and the like, surfactants described in paragraphs "0117" to "0132" of JP2011-132503A, and surfactants described in JP2020-008634A, the contents of which are incorporated herein by reference. Examples of a commercially available product of the fluorine-based surfactant include: MEGAFACE F-171, F-172, F-173, F-176, F-177, F-141, F-142, F-143, F-144, F-437, F-475, F-477, F-479, F-482, F-554, F-555-A, F-556, F-557, F-558, F-559, F-560, F-561, F-565, F-563, F-568, F-575, F-780, EXP, MFS-330, R-01, R-40, R-40-LM, R-41, R-41-LM, RS-43, R-43, TF-1956, RS-90, R-94, RS-72-K, and DS-21 (all of which are manufactured by DIC Corporation); FLUORAD FC430, FC431, and FC171 (all of which are manufactured by Sumitomo 3M Ltd.); SURFLON S-382, SC-101, SC-103, SC-104, SC-105, SC-1068, SC-381, SC-383, S-393, and KH-40 (all of which are manufactured by Asahi Glass Co., Ltd.); POLYFOX PF636, PF656, PF6320, PF6520, and PF7002 (all of which are manufactured by OMNOVA Solutions Inc.); and FTERGENT 208G, 215M, 245F, 601AD, 601ADH2, 602A, 610FM, 710FL, 710FM, 710FS, and FTX-218 (manufactured by NEOS COMPANY LIMITED).

In addition, as the fluorine-based surfactant, an acrylic compound in which, in a case where heat is applied to a molecular structure which has a functional group having a fluorine atom, the functional group having a fluorine atom is cut and a fluorine atom is volatilized can also be suitably used. Examples of such a fluorine-based surfactant include MEGAFACE DS series manufactured by DIC Corporation (The Chemical Daily (February 22, 2016) and Nikkei Business Daily (February 23, 2016)), for example, MEGAFACE DS-21.

In addition, as the fluorine-based surfactant, a polymer of a fluorine atom-containing vinyl ether compound having a fluorinated alkyl group or a fluorinated alkylene ether group, and a hydrophilic vinyl ether compound can be preferably used. Examples of such a fluorine-based surfactant include fluorine-based surfactants described in JP2016-216602A, the contents of which are incorporated herein by reference.

As the fluorine-based surfactant, a block polymer can also be used. As the fluorine-based surfactant, a fluorine-containing polymer compound can be preferably used, the fluorine-containing polymer compound including: a repeating unit derived from a (meth)acrylate compound having a fluorine atom; and a repeating unit derived from a (meth)acrylate compound having 2 or more (preferably 5 or more) alkyleneoxy groups (preferably an ethyleneoxy group and a propyleneoxy group). In addition, fluorine-containing surfactants described in paragraph "0016" to "0037" of JP2010-032698A, or the following compounds are also exemplified as the fluorine-based surfactant used in the present invention.

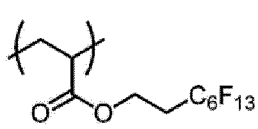

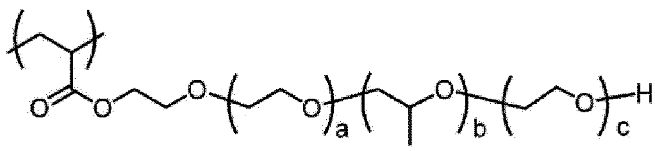

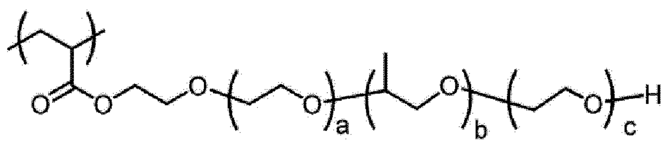

62%

38%

a+c=14
b=17

A weight-average molecular weight of the above-described compound is preferably 3,000 to 50,000 and, for example, 14,000. In the above-described compound, "%" representing the proportion of a repeating unit is mol%.

In addition, as the fluorine-based surfactant, a fluorine-containing polymer having an ethylenically unsaturated bond-containing group at a side chain can also be used. Specific examples include a compound described in paragraphs "0050" to "0090" and paragraphs "0289" to "0295" of JP2010-164965A, for example, MEGAFACE RS-101, RS-102, RS-718K, and RS-72-K manufactured by DIC Corporation. In addition, as the fluorine-based surfactant, a compound described in paragraphs "0015" to "0158" of JP2015-117327A can also be used.

In addition, from the viewpoint of environmental regulation, it is also preferable to use a surfactant described in WO2020/084854A as a substitute for the surfactant having a perfluoroalkyl group having 6 or more carbon atoms.

In addition, it is also preferable to use a fluorine-containing imide salt compound represented by Formula (fi-1) as the surfactant.

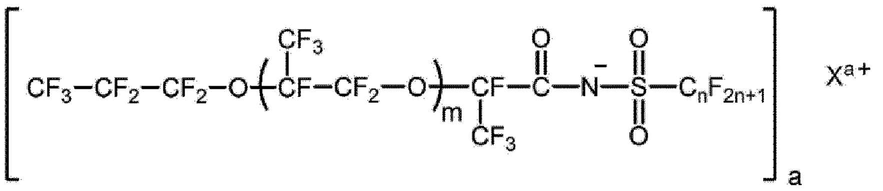

(fi-1)

In Formula (fi-1), m represents 1 or 2, n represents an integer of 1 to 4, a represents 1 or 2, and $X^{a+}$ represents an a-valent metal ion, a primary ammonium ion, a secondary ammonium ion, a tertiary ammonium ion, a quaternary ammonium ion, or $NH_4^+$.

Examples of the nonionic surfactant include glycerol, trimethylolpropane, trimethylolethane, an ethoxylate and propoxylate thereof (for example, glycerol propoxylate or glycerol ethoxylate), polyoxyethylene lauryl ether, polyoxyethylene stearyl ether, polyoxyethylene oleyl ether, polyoxyethylene octylphenyl ether, polyoxyethylene nonylphenyl ether, polyethylene glycol dilaurate, polyethylene glycol distearate, sorbitan fatty acid esters, PLURONIC L10, L31, L61, L62, 10R5, 17R2, and 25R2 (manufactured by BASF), TETRONIC 304, 701, 704, 901, 904, and 150R1 (manufactured by BASF), SOLSPERSE 20000 (manufactured by Lubrizol Corporation), NCW-101, NCW-1001, and NCW-1002 (all of which are manufactured by FUJIFILM Wako Pure Chemical Corporation), PIONIN D-6112, D-6112-W, and D-6315 (all of which are manufactured by Takemoto Oil & Fat Co., Ltd.), and OLFINE E1010 and SURFYNOL 104, 400, and 440 (all of which are manufactured by Nissin Chemical Co., Ltd.).

Examples of the silicone-based surfactant include DOWSII, SH8400, SH 8400 FLUID, FZ-2122, 67 Additive, 74 Additive, M Additive, and SF 8419 OIL (all of which are manufactured by Dow·TORAY); TSF-4300, TSF-4445, TSF-4460, and TSF-4452 (all of which are manufactured by Momentive Performance Materials Inc.); KP-341, KF-6000, KF-6001, KF-6002, and KF-6003 (all of which are manufactured by Shin-Etsu Chemical Co., Ltd.); and BYK-307, BYK-322, BYK-323, BYK-330, BYK-333, BYK-3760, and BYK-UV3510 (all of which are manufactured by BYK-Chemie Japan K.K.).

In addition, as the silicone-based surfactant, a compound having the following structure can also be used.

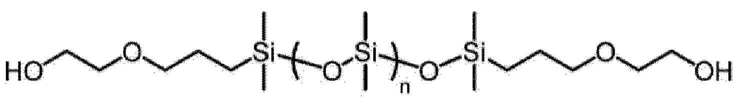

A content of the surfactant in the total solid content of the composition for forming a film is preferably 0.001 to 2 mass%, and more preferably 0.005 to 1 mass%. As the surfactant, one kind may be used alone, or two or more kinds may be used in combination. In a case where two or more kinds thereof are used in combination, it is preferable that the total content of the two or more kinds thereof is within the above-described range.

«Polymerization inhibitor»

The composition for forming a film can contain a polymerization inhibitor. Examples of the polymerization inhibitor include hydroquinone, p-methoxyphenol, di-tert-butyl-p-cresol, pyrogallol, tert-butyl catechol, 1,4-benzoquinone, 4,4'-thiobis(3-methyl-6-tert-butylphenol), 2,2'-methylenebis(4-methyl-6-t-butylphenol), and an N-nitrosophenylhydroxylamine salt (an ammonium salt, a cerous salt, or the like). Among these, p-methoxyphenol is preferable. A content of the polymerization inhibitor in the total solid content of the composition for forming a film is preferably 0.0001 to 5 mass%, and more preferably 0.0001 to 1 mass%.

<<Chain transfer agent>>

The composition for forming a film can contain a chain transfer agent. Examples of the chain transfer agent include N,N-dialkylamino benzoic acid alkyl ester and a thiol compound. Among these, a thiol compound is preferable. As the thiol compound, a compound having 2 or more (preferably 2 to 8 and more preferably 3 to 6) mercapto groups in a molecule is preferable. Specific examples of the thiol compound include: a thiol compound having a heterocycle such as 2-mercaptobenzothiazole, 2-mercaptobenzoxazole, 2-mercaptobenzimidazole, N-phenylmercaptobenzimidazole, or 1,3,5-tris(3-mercaptobutyloxyethyl]-1,3,5-triazine-2,4,6(1H,3H,5H)-trione; and an aliphatic thiol compound such as pentaerythritol tetrakis(3-mercaptobutylate) or 1,4-bis(3-mercaptobutyryloxy)butane. In addition, examples of a commercially available product of the chain transfer agent include PEMP (a thiol compound, manufactured by SC Organic Chemical Co., Ltd.), SANCELER M (a thiol compound, manufactured by Sanshin Chemical Industry Co., Ltd.), and KARENZ MT BD1 (a thiol compound, manufactured by Showa Denko K.K.). In addition, it is also preferable that compounds having the following structures are used.

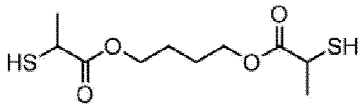
(S-1)

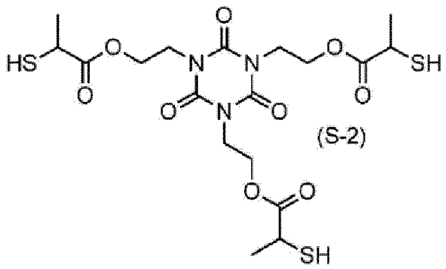
(S-2)

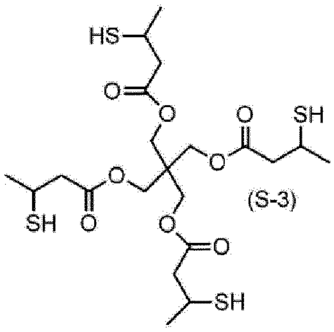
(S-3)

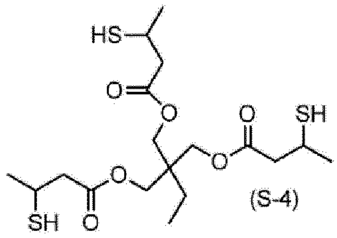
(S-4)

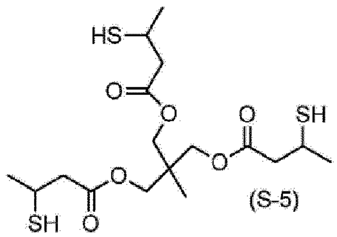
(S-5)

A content of the chain transfer agent in the total solid content of the composition for forming a film is preferably 0.2 to 5 mass%, and more preferably 0.4 to 3 mass%. In addition, the content of the chain transfer agent is preferably 1 to 40 parts by mass, and more preferably 2 to 20 parts by mass with respect to 100 parts by mass of the polymerizable monomer. As the chain transfer agent, one kind may be used alone, or two or more kinds may be used in combination. In a case where two or more kinds thereof are used in combination, it is preferable that the total content of the two or more kinds thereof is within the above-described range.

<<Sensitizer and co-sensitizer>>

In a case where the composition for forming a film contains the photopolymerization initiator, the composition for forming a film may further contain a sensitizer or a co-sensitizer. It is preferable that the sensitizer sensitizes the photopolymerization initiator using an electron migration mechanism or an energy-transfer mechanism. Examples of the sensitizer include a compound having an absorption in a wavelength in a range of 300 to 450 nm. With regard to the sensitizer, the details can be found in the description of paragraphs "0231" to "0253" of JP2010-106268A (corresponding to paragraphs "0256" to "0273" of US2011/0124824A), the content of which is incorporated herein by reference. With regard to the co-sensitizer, the details can be found in the description of paragraphs "0254" to "0257" of JP2010-106268A (corresponding to paragraphs "0277" to "0279" of US2011/0124824A), the content of which is incorporated herein by

reference.

A content of the sensitizer in the total solid content of the composition for forming a film is preferably 0.1 to 20 mass%, and more preferably 0.5 to 15 mass%. As the sensitizer, one kind may be used alone, or two or more kinds may be used in combination. In a case where two or more kinds thereof are used in combination, it is preferable that the total content of the two or more kinds thereof is within the above-described range. In addition, a content of the co-sensitizer in the total solid content of the composition for forming a film is preferably 0.1 to 20 mass%, and more preferably 0.5 to 15 mass%. As the co-sensitizer, one kind may be used alone, or two or more kinds may be used in combination. In a case where two or more kinds thereof are used in combination, it is preferable that the total content of the two or more kinds thereof is within the above-described range.

<<Other additives>>

A known additive such as a plasticizer and a sensitization agent may be contained in the composition for forming a film, in order to improve physical properties of the film. Examples of the plasticizer include dioctyl phthalate, didodecyl phthalate, triethylene glycol dicaprylate, dimethyl glycol phthalate, tricresyl phosphate, dioctyl adipate, dibutyl sebacate, and triacetyl glycerin.

<Method of Forming Film>

The film according to the embodiment of the present invention can be formed through a step of applying the composition for forming a film onto a support. Examples of the support include a substrate formed of a material such as silicon, non-alkali glass, soda glass, PYREX (registered trade name) glass, or quartz glass. For example, an organic film or an inorganic film may be formed on the substrate. Examples of a material of the organic film include a resin. In addition, as the support, a substrate formed of the resin can also be used. In addition, a charge coupled device (CCD), a complementary metal-oxide semiconductor (CMOS), a transparent conductive film, or the like may be formed on the support. In addition, a black matrix that separates pixels from each other may be formed on the support. In addition, optionally, an undercoat layer may be provided on the support to improve adhesiveness with a layer above the support, to prevent diffusion of materials, or to make a surface of the substrate flat. In addition, in a case where a glass substrate is used as the support, it is preferable that an inorganic film is formed on the glass substrate or the glass substrate may be dealkalized to be used.

As a method of applying the composition for forming a film onto the support, a known method can be used. Examples of the known method include: a drop casting method; a slit coating method; a spray coating method; a roll coating method; a spin coating method; a cast coating method; a slit and spin method; a pre-wetting method (for example, a method described in JP2009-145395A); various printing methods including jet printing such as an ink jet method (for example, an on-demand method, a piezoelectric method, or a thermal method) or a nozzle jet method, flexographic printing, screen printing, gravure printing, reverse offset printing, and metal mask printing; a transfer method using a mold or the like; and a nanoimprinting method. The application method using an inkjet method is not particularly limited, and examples thereof include a method (in particular, pp. 115 to 133) described in "Extension of Use of Ink Jet - Infinite Possibilities in Patent-" (February, 2005, S.B. Research Co., Ltd.) and methods described in JP2003-262716A, JP2003-185831A, JP2003-261827A, JP2012-126830A, and JP2006-169325A. From the viewpoint of suitability for application, the application using a spin coating method is preferably spin coating at 300 to 6000 rpm and more preferably spin coating at 400 to 3000 rpm. In addition, the temperature of the support during spin coating is preferably 10°C to 100°C and more preferably 20°C to 70°C. In a case where the temperature of the support is in the above-described range, a film having excellent application uniformity is likely to be formed. In a case where the drop casting method is used, it is preferable that a drop range of the composition for forming a film in which a photoresist is used as a partition wall is formed on the support such that a film having a predetermined uniform film thickness can be obtained. A desired film thickness can be obtained by controlling the drop amount and concentration of solid contents of the composition for forming a film and the area of the drop range.

The composition layer formed on the support may be dried (pre-baked). For example, it is preferable that the film is dried under pre-baking conditions of a temperature of 60°C to 150°C and 30 seconds to 15 minutes.

The method of forming the film according to the embodiment of the present invention may further include a step of forming a pattern. Examples of a pattern forming method include a pattern forming method using a photolithography method and a pattern forming method using a dry etching method. In a case where the film according to the embodiment of the present invention is used as a flat film, the step of forming a pattern is not necessarily performed. Hereinafter, the step of forming a pattern will be described in detail.

(Case where Pattern is Formed using Photolithography Method)

It is preferable that the pattern forming method using a photolithography method includes: a step (exposure step) of exposing the composition layer, which is formed by applying the composition for forming a film onto the support in a patterned manner; and a step (development step) of forming a pattern by removing a non-exposed portion of the composition layer for development. Optionally, the pattern forming method may further include a step (post-baking step) of baking the developed pattern. Hereinafter, the respective steps will be described.

<<Exposure step>>

In the exposure step, the composition layer is exposed in a patterned manner. For example, the composition layer can be exposed in a pattern shape using an exposure device such as a stepper through a mask having a predetermined mask pattern. As a result, an exposed portion can be cured. Examples of the radiation (light) which can be used during the exposure include g-rays and i-rays. In addition, light (preferably light having a wavelength of 180 to 300 nm) having a wavelength of 300 nm or less can also be used. Examples of the light having a wavelength of 300 nm or less include KrF-rays (wavelength: 248 nm) and ArF-rays (wavelength: 193 nm), and KrF-rays (wavelength: 248 nm) are preferable.

In addition, during the exposure, light may be continuously radiated for the exposure, or may be radiated in the form of a pulse for the exposure (pulse exposure). The pulse exposure refers to an exposing method in which light irradiation and resting are repeatedly performed in a short cycle (for example, millisecond-level or less). In a case of the pulse exposure, the pulse width is preferably 100 nanoseconds (ns) or less, more preferably 50 nanoseconds or less, and still more preferably 30 nanoseconds or less. The lower limit of the pulse width is not particularly limited, and may be 1 femtosecond (fs) or more or 10 femtoseconds or more. The frequency is preferably 1 kHz or more, more preferably 2 kHz or more, and still more preferably 4 kHz or more. The upper limit of the frequency is preferably 50 kHz or less, more preferably 20 kHz or less, and still more preferably 10 kHz or less. The maximum instantaneous illuminance is preferably 50,000,000 $W/m^2$ or more, more preferably 100,000,000 $W/m^2$ or more, and still more preferably 200,000,000 $W/m^2$ or more. In addition, the upper limit of the maximum instantaneous illuminance is preferably 1,000,000,000 $W/m^2$ or less, more preferably 800,000,000 $W/m^2$ or less, and still more preferably 500,000,000 $W/m^2$ or less. The pulse width refers to a time during which light is irradiated in a pulse period. The frequency is the number of pulse periods per second. The maximum instantaneous illuminance is average illuminance within the time during which light is radiated in the pulse period. The pulse period is a period in which irradiation with light and resting are one cycle in the pulse exposure.

In addition, for example, the irradiation amount (exposure amount) is preferably 0.03 to 2.5 $J/cm^2$, more preferably 0.05 to 1.0 $J/cm^2$, and most preferably 0.08 to 0.5 $J/cm^2$. The oxygen concentration in a case of the exposure can be appropriately selected. For example, the exposure may be performed in air, in a low-oxygen atmosphere having an oxygen concentration of 19 vol% or less (for example, 15 vol%, 5 vol%, or substantially oxygen-free), or in a high-oxygen atmosphere having an oxygen concentration of more than 21 vol% (for example, 22 vol%, 30 vol%, or 50 vol%). In addition, the exposure illuminance can be appropriately set, and is preferably selected in a range of 1,000 to 100,000 $W/m^2$. Conditions of the oxygen concentration and conditions of the exposure illuminance may be appropriately combined. For example, conditions are oxygen concentration: 10 vol% and illuminance: 10,000 $W/m^2$, or oxygen concentration: 35 vol% and illuminance: 20,000 $W/m^2$.

<<Development step>>

Next, a pattern is formed by removing a non-exposed portion of the exposed composition layer by development. The non-exposed portion of the composition layer can be removed by development using a developer. As a result, a non-exposed portion of the composition layer in the exposure step is eluted into the developer, and only the photocured portion remains on the support. For example, the temperature of the developer is preferably 20°C to 30°C. The development time is preferably 20 to 180 seconds. In addition, in order to further improve residues removing properties, a step of shaking the developer off per 60 seconds and supplying a new developer may be repeated multiple times.

Examples of the developer include an organic solvent and an alkali developer, and an alkali developer is preferably used. As the alkali developer, an alkaline aqueous solution (alkali developer) in which an alkaline agent is diluted with pure water is preferable. Examples of the alkaline agent include: organic alkaline compounds such as ammonia, ethylamine, diethylamine, dimethylethanolamine, diglycolamine, diethanolamine, hydroxyamine, ethylenediamine, tetramethylammonium hydroxide, tetraethylammonium hydroxide, tetrapropylammonium hydroxide, tetrabutylammonium hydroxide, ethyltrimethylammonium hydroxide, benzyltrimethylammonium hydroxide, dimethyl bis(2-hydroxyethyl)ammonium hydroxide, choline, pyrrole, piperidine, and 1,8-diazabicyclo[5.4.0]-7-undecene; and inorganic alkaline compounds such as sodium hydroxide, potassium hydroxide, sodium carbonate, sodium hydrogen carbonate, sodium silicate, and sodium metasilicate. In consideration of environmental aspects and safety aspects, the alkaline agent is

preferably a compound having a high molecular weight. A concentration of the alkaline agent in the alkaline aqueous solution is preferably 0.001 to 10 mass% and more preferably 0.01 to 1 mass%. In addition, the developer may further contain a surfactant. Examples of the surfactant include the surfactants described above. Among these, a nonionic surfactant is preferable. From the viewpoint of easiness of transport, storage, and the like, the developer may be obtained by temporarily preparing a concentrated solution and diluting the concentrated solution to a necessary concentration during use. The dilution factor is not particularly limited and, for example, can be set to be in a range of 1.5 to 100 times. In a case where the alkaline aqueous solution is used as a developer, it is preferable that the layer is washed (rinsed) with pure water after development. In addition, it is preferable that the rinsing is performed by supplying a rinsing liquid to the composition layer after development while rotating the support on which the composition layer after development is formed. In addition, it is preferable that the rinsing is performed by moving a nozzle discharging the rinsing liquid from a center of the support to a peripheral edge of the support. In this case, in the movement of the nozzle from the center of the support to the peripheral edge of the support, the nozzle may be moved while gradually decreasing the moving speed of the nozzle. By performing rinsing in this manner, in-plane variation of rinsing can be suppressed. In addition, the same effect can be obtained by gradually decreasing the rotating speed of the support while moving the nozzle from the center of the support to the peripheral edge of the support.

After the development, it is preferable to perform an additional exposure treatment or a heating treatment (post-baking) after carrying out drying. The additional exposure treatment or the post-baking is a curing treatment after development in order to complete curing. The heating temperature in the post-baking is preferably, for example, 100°C to 260°C. The lower limit of the heating temperature is preferably 120°C or higher and more preferably 160°C or higher. The upper limit of the heating temperature is preferably 240°C or lower and more preferably 220°C or lower. The film after development is post-baked continuously or batchwise using a heating unit such as a hot plate, a convection oven (hot air circulation dryer), and a high-frequency heater under the above-described conditions. In a case of performing the additional exposure treatment, light used for the exposure is preferably light having a wavelength of 400 nm or less. In addition, the additional exposure treatment may be carried out by the method described in KR10-2017-0122130A.

(Case where Pattern is Formed using Dry Etching Method)

The formation of a pattern using a dry etching method can be performed using a method including: applying the composition for forming a film onto a support to form a composition layer; curing the composition layer to form a cured composition layer; forming a patterned resist layer on the cured composition layer; and dry-etching the cured composition layer with etching gas by using the patterned resist layer as a mask. The details of the pattern formation using the dry etching method can be found in paragraphs "0010" to "0067" of JP2013-064993A, the content of which is incorporated herein by reference.

<Optical sensor>

The optical sensor according to the embodiment of the present invention includes the film according to the embodiment of the present invention. Examples of the type of the optical sensor include an ambient light sensor and an illuminance sensor, and the optical sensor is preferably used as an ambient light sensor. The ambient light sensor is a sensor which detects hue of ambient light.

It is also preferable that the optical sensor according to the embodiment of the present invention has an optical filter having at least one pixel selected from a colored pixel or a pixel of an infrared transmitting filter, in addition to the film according to the embodiment of the present invention. Examples of the colored pixel include a red pixel, a blue pixel, a green pixel, a yellow pixel, a cyan pixel, and a magenta pixel. In addition, it is preferable that the film according to the embodiment of the present invention is provided closer to a light incident side than the above-described optical filter. By providing the film according to the embodiment of the present invention closer to the light incident side than the optical filter, angle dependence can be further reduced for each pixel.

An embodiment of the optical sensor is shown with reference to the drawings. An optical sensor 1 shown in Fig. 1 is provided with an optical filter 110 having pixels 111 to 114 on a photoelectric conversion element 101. A film 121 according to the embodiment of the present invention is formed on the optical filter 110. As an example of the pixels 111 to 114 constituting the optical filter 110, a combination in which the pixel 111 is a red pixel, the pixel 112 is a blue pixel, the pixel 113 is a green pixel, and the pixel 114 is a pixel of an infrared transmitting filter can be mentioned. In the optical sensor 1 shown in Fig. 1, the optical filter 110 having four types of pixels (pixels 111 to 114) is used, but the types of pixels may be one to three types or may be five or more types. The types can be appropriately selected according to the application. In addition, a planarizing layer may be interposed between the photoelectric conversion element 101 and the optical filter 110, or between the optical filter 110 and the film 121 according to the embodiment of the present invention.

Fig. 2 shows another embodiment of the optical sensor. An optical sensor 2 shown in Fig. 2 is provided with

an optical filter 110 having pixels 111 to 114 on a photoelectric conversion element 101. The optical filter 110 has the same configuration as that of the above-described embodiment. A member in which a film 122 according to the embodiment of the present invention is formed on a surface of a transparent support 130 is disposed on the optical filter 110. Examples of the transparent support 130 include a glass substrate and a resin substrate. In the optical sensor 2 shown in Fig. 2, the member in which the film 122 according to the embodiment of the present invention is formed on the surface of the transparent support 130 is disposed on the optical filter 110 at predetermined intervals, but the optical filter 110 and the member in which the film 122 according to the embodiment of the present invention is formed on the surface of the transparent support 130 may be in contact with each other. In addition, in the optical sensor 2 shown in Fig. 2, the film 122 according to the embodiment of the present invention is formed on only one surface of the transparent support 130, but the film 122 according to the embodiment of the present invention may be formed on both surfaces of the transparent support 130. In addition, in the optical sensor 2 shown in Fig. 2, the film 122 according to the embodiment of the present invention is formed on the surface of the transparent support 130 on the optical filter 110 side, but the film 122 according to the embodiment of the present invention may be formed on the surface of the transparent support 130 opposite to the optical filter 110 side. In addition, a planarizing layer may be interposed between the photoelectric conversion element 101 and the optical filter 110, or between the film 122 according to the embodiment of the present invention and the transparent support 130.

Examples

Hereinafter, the present invention will be described in more detail using Examples, but the present invention is not limited to these examples.

<Measurement of average primary particle diameter of particles>

The primary particle diameter of the particles was obtained by observing particles with a transmission electron microscope (TEM) and observing a portion (primary particle) where the particles did not aggregate. Specifically, a particle size distribution was obtained by imaging a transmission electron micrograph of primary particles using a transmission microscope and measuring a particle size distribution with an image processing device using the micrograph. The average primary particle diameter of the particles refers to the number average particle size calculated from the particle size distribution. An electron microscope (H-7000, manufactured by Hitachi, Ltd.) was used as the transmission electron microscope, and a LUZEX AP (manufactured by Nireco Corporation) was used as the image processing device.

<Measurement of refractive index of particles>

A dispersion liquid was prepared using the particles, a resin (dispersant) having a known refractive index, and propylene glycol monomethyl ether acetate. Next, the prepared dispersion liquid and a resin having a known refractive index were mixed with each other to prepare coating liquids in which the concentrations of the particles in the total solid content of the coating liquids was 10 mass%, 20 mass%, 30 mass%, and 40 mass%. Using each of the coating liquids, a film having a thickness of 300 nm was formed on a silicon wafer, and the refractive index of the obtained film was measured by ellipsometry (LAMBDA ACE RE-3300, manufactured by SCREEN Holdings Co., Ltd.). Next, the concentration and refractive index of the particles were plotted on a graph to calculate the refractive index of the particles.

<Measurement of weight-average molecular weight>

A weight-average molecular weight was measured by gel permeation chromatography (GPC) according to the following conditions.

Type of column: a column in which TOSOH TSK gel Super HZM-H, TOSOH TSK gel Super HZ4000, and TOSOH TSK gel Super HZ2000 were linked to each other
Developing solvent: tetrahydrofuran
Column temperature: 40°C
Flow rate (sample injection volume): 1.0 μL (sample concentration: 0.1 mass%)
Device name: HLC-8220 GPC (manufactured by Tosoh Corporation)
Detector: refractive index (RI) detector
Calibration curve base resin: a polystyrene resin

<Measuring method of acid value>

The acid value indicates the mass of potassium hydroxide required to neutralize an acidic component per 1 g of solid content. A measurement sample was dissolved in a mixed solvent including tetrahydrofuran and water at a ratio (tetrahydrofuran/water) of 9/1, and the obtained solution was neutralized and titrated with a 0.1 mol/L sodium hydroxide aqueous solution at 25°C using a potentiometric titrator (trade name: AT-510, manufactured by Kyoto Electronics Manufacturing Co., Ltd.). An inflection point of a titration pH curve was set as a titration end point, and the acid value was calculated from the following expression.

$$A=56.11 \text{ x } Vs \text{ x } 0.5 \text{ x } f/w$$

A: acid value (mgKOH/g)
Vs: amount (mL) of the 0.1 mol/L sodium hydroxide aqueous solution used for the titration
f: titer of the 0.1 mol/L sodium hydroxide aqueous solution
w: mass (g) of the measurement sample (expressed in terms of solid contents)

<Production of composition for forming film>

Materials described in the following table were mixed to prepare a composition for forming a film (compositions 1 to 6 c1 to c3). With regard to a dispersion liquid, materials described in the column of dispersion liquid of the following table were mixed with each other in amounts shown in part by mass at the column of dispersion liquid of the following table, 230 parts by mass of zirconia beads having a diameter of 0.3 mm was further added thereto, the mixture was dispersed using a paint shaker for 5 hours, and the beads were separated by filtration, thereby producing a dispersion liquid to be used.

[Table 1]

| | Dispersion liquid | | | | | | Binder | | Polymerizable monomer | | Photopolymerization initiator | | Surfactant | | Polymerization inhibitor | | Additive | | Solvent | |
|---|---|---|---|---|---|---|---|---|---|---|---|---|---|---|---|---|---|---|---|---|
| | Particle | | Dispersant | | Solvent | | | | | | | | | | | | | | | |
| | Type | Partby mass | Type | Part by mass | Type | Partby mass | Type | Part by mass | Type | Part by mass | Type | Part by mass | Type | Part by mass | Type | Part by mass | Type | Part by mass | Type | Partby mass |
| Composition 1 | A-1<br>A-2 | 18.03<br>2.01 | B-1 | 6.01 | S-1<br>S-2 | 22.35<br>2.57 | C-1 | 8.96 | D-1 | 9.57 | E-1 | 2.71 | F-2 | 0.0083 | G-1 | 0.0048 | H-1<br>H-2 | 0.25<br>2.5 | S-1 | 25.03 |
| Composition 2 | A-1<br>A-2 | 18.03<br>2.01 | B-1 | 6.01 | S-1<br>S-2 | 22.35<br>2.57 | C-2 | 8.96 | D-1 | 9.57 | E-1 | 2.71 | F-2 | 0.0083 | G-1 | 0.0048 | H-1<br>H-2 | 0.25<br>2.5 | S-1 | 25.03 |
| Composition 3 | A-1<br>A-2 | 18.03<br>2.01 | B-1 | 6.01 | S-1<br>S-2 | 22.35<br>2.57 | C-3 | 8.96 | D-1 | 9.57 | E-1 | 2.71 | F-2 | 0.0083 | G-1 | 0.0048 | H-1<br>H-2 | 0.25<br>2.5 | S-1 | 25.03 |
| Composition 4 | A-1<br>A-2 | 18.03<br>2.01 | B-1 | 6.01 | S-1<br>S-2 | 22.35<br>2.57 | C-1 | 8.96 | D-1 | 9.57 | E-1 | 2.71 | F-1 | 0.0083 | G-1 | 0.0048 | H-1<br>H-2 | 0.25<br>2.5 | S-1 | 25.03 |
| Composition 5 | A-1<br>A-2 | 18.03<br>2.01 | B-1 | 6.01 | S-1<br>S-2 | 22.35<br>2.57 | C-1 | 8.96 | D-2 | 9.57 | E-1 | 2.71 | F-2 | 0.0083 | G-1 | 0.0048 | H-1<br>H-2 | 0.25<br>2.5 | S-1 | 25.03 |
| Composition 6 | A-1<br>A-2 | 18.03<br>2.01 | B-1 | 6.01 | S-1<br>S-2 | 22.35<br>2.57 | C-1 | 8.96 | D-1 | 9.57 | E-1<br>E-2 | 1.36<br>1.36 | F-2 | 0.0083 | G-1 | 0.0048 | H-1<br>H-2 | 0.25<br>2.5 | S-1 | 25.03 |
| Composition c1 | A-1<br>A-2 | 18.03<br>2.01 | B-1 | 6.01 | S-1<br>S-2 | 22.35<br>2.57 | C-4 | 8.96 | D-1 | 9.57 | E-1 | 2.71 | F-2 | 0.0083 | G-1 | 0.0048 | H-1<br>H-2 | 0.25<br>2.5 | S-1 | 25.03 |
| Composition c2 | A-1<br>A-2 | 18.03<br>2.01 | B-1 | 6.01 | S-1<br>S-2 | 22.35<br>2.57 | C-5 | 8.96 | D-1 | 9.57 | E-1 | 2.71 | F-2 | 0.0083 | G-1 | 0.0048 | H-1<br>H-2 | 0.25<br>2.5 | S-1 | 25.03 |
| Composition c3 | A-1<br>A-2 | 18.03<br>2.01 | B-1 | 6.01 | S-1<br>S-2 | 22.35<br>2.57 | C-6 | 8.96 | D-1 | 9.57 | E-1 | 2.71 | F-2 | 0.0083 | G-1 | 0.0048 | H-1<br>H-2 | 0.25<br>2.5 | S-1 | 25.03 |

Details of the materials shown in the above table are as follows.

(Particles)

A-1: titanium oxide ($TiO_2$) particles (average primary particle diameter: 90 nm, refractive index to light having a wavelength of 550 nm: 2.52)
A-2: aluminum hydroxide ($Al_2(OH)_3$) particles (average primary particle diameter: 90 nm, refractive index to light having a wavelength of 550 nm: 1.57)

(Dispersant)

B-1: resin having the following structure (weight-average molecular weight: 12,100, acid value: 156 mgKOH/g, n1/n2 = 85/15 (mass ratio))

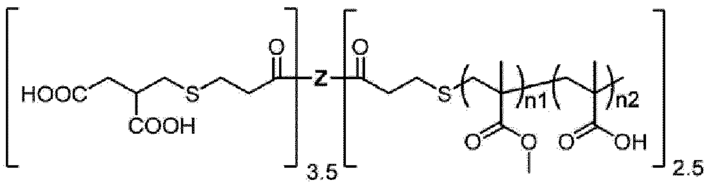

Z=

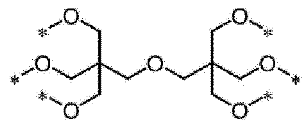

(Binder)

C-1 to C-6: resins having the following structures

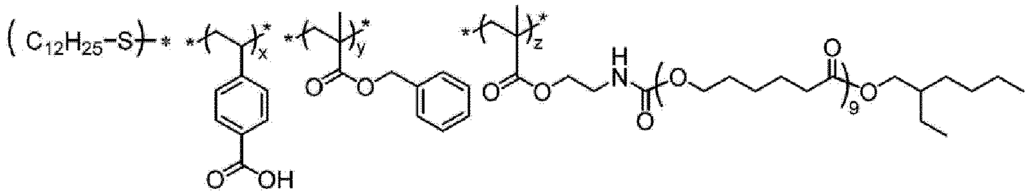

[Table 2]

| | Molar ratio | | | Weight-average molecular weight | Acid value (mgKOH/g) |
|---|---|---|---|---|---|
| | x | y | z | | |
| C-1 | 19 | 31 | 50 | 19206 | 68.3 |
| C-2 | 22 | 28 | 50 | 19146 | 79.3 |
| C-3 | 24 | 26 | 50 | 18924 | 87.3 |
| C-4 | 16 | 34 | 50 | 19258 | 58.9 |
| C-5 | 27 | 23 | 50 | 18854 | 97.5 |
| C-6 | 31 | 19 | 50 | 20132 | 112.8 |

(Polymerizable Monomer)

D-1: compound having the following structure

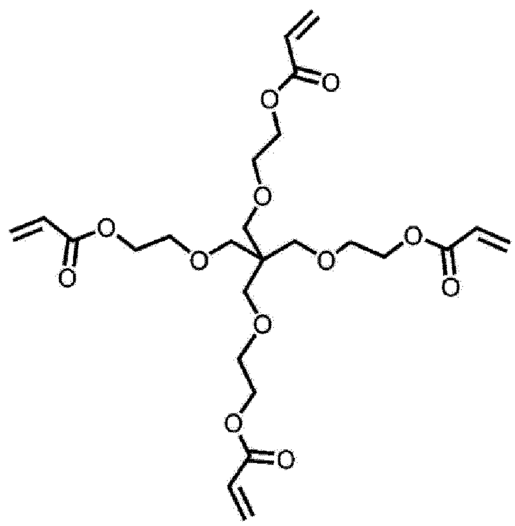

D-2: KAYARAD DPHA (manufactured by Nippon Kayaku Co., Ltd.)

(Photopolymerization Initiator)

E-1: compound having the following structure (Omnirad TPO H, manufactured by IGM Resins B.V)
E-2: compound having the following structure (oxime compound)

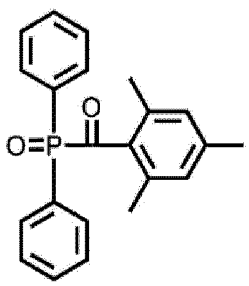

(E-1)

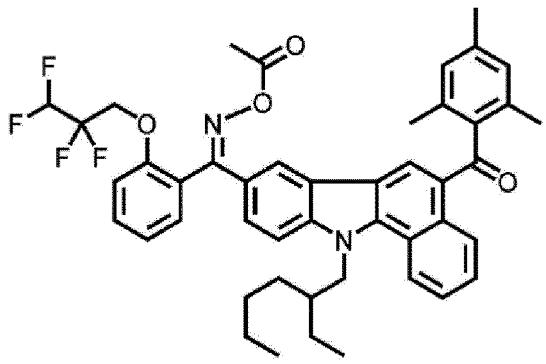

(E-2)

(Surfactant)

F-1: compound having the following structure (silicone-based surfactant)

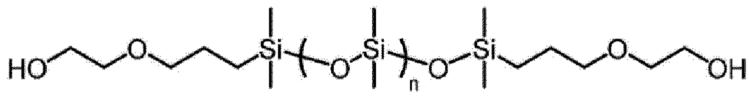

F-2: DOWSII, SH 8400 Fluid (manufactured by Dow·TORAY, silicone-based surfactant)

(Polymerization Inhibitor)

G-1: p-methoxyphenol

(Additive)

H-1: compound having the following structure (antioxidant)

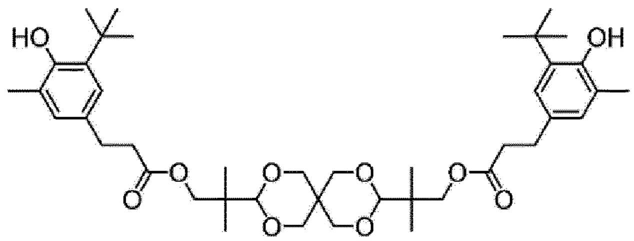

H-2: compound having the following structure (silane coupling agent)

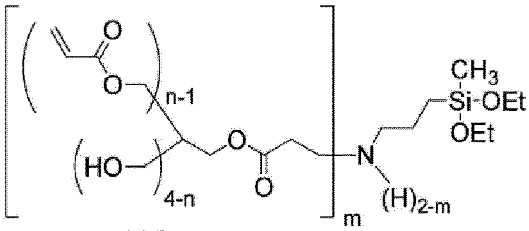

n = 4,3,2
(n=4 main reactant)

m = 2 or 1
(m=2 main product)

(Solvent)

S-1: propylene glycol monomethyl ether acetate (PGMEA)

S-2: propylene glycol monomethyl ether (PGME)

<Production of film>

Each composition was applied onto a glass substrate using a spin coater (300 rpm for 3 seconds, 1000 rpm for 3 seconds, and then 150 rpm for 150 seconds), and heat-treated (pre-baked) for 2 minutes using a hot plate at 100°C. Next, using an i-ray stepper exposure device FPA-3000 i5+ (manufactured by Canon Corporation), the coating film was exposed to light having a wavelength of 365 nm at an exposure amount of 1,700 mJ/$cm^2$. Thereafter, a heating treatment (post-baking) was performed for 5 minutes using a hot plate at 220°C to form a film having a thickness of 8.0 μm.

In a case where the obtained film was observed using a scanning electron microscope (SEM) (magnification: 7,500 times), the particles were unevenly distributed in the film to form a co-continuous phase structure, and a phase-separated structure (co-continuous phase structure) of the phase A having a refractive index of 1.7 or more for light having a wavelength of 550 nm and the phase B having a refractive index of 1.6 or less for the light having a wavelength of 550 nm was formed.

Next, for a cross-sectional SEM image taken of each film in a thickness direction, an image in a range of 6 μm × 15 μm was trimmed, the trimmed image was binarized using image processing software (ImageJ), and edges of the binarized image were detected. The number of edge pixels in the detected image was counted and converted into a distance, and the total length (total interface distance $L_0$) of the distance in the interface between the phase A and the phase B in the image was calculated. The calculated total interface distance $L_0$ was standardized by the observation area (6 μm × 15 μm) of the trimmed SEM image, and in the cross section of the film in the thickness direction, the total

length (hereinafter, total interface distance $L_1$) of the distance in the interface between the phase A and the phase B per 1 $\mu$m $\times$ 1 $\mu$m was obtained.

<Evaluation of average transmittance>

Light was incident on the obtained film in the normal direction (direction perpendicular to the film surface), and using a spectrophotometer (U-4100 manufactured by Hitachi High-Tech Corporation.), an average transmittance of light in a wavelength range of 450 to 940 nm, transmitted through the film in the normal direction, was measured and evaluated according to the following standard.

A: average transmittance was 10% or more and 50% or less.
B: average transmittance was less than 10% or more than 50%.

<Evaluation of angle dependence of spectroscopy>

Light was incident on the obtained film in the normal direction (direction perpendicular to the film surface), an intensity of light having a wavelength of 940 nm, which was transmitted through the film and was a transmitted light in the normal direction, an intensity of transmitted light scattered in a direction of 10 degrees from the normal direction, and an intensity of light having a wavelength of 940 nm, which was transmitted through the film and is transmitted light scattered in a direction of 50 degrees from the normal direction, were each measured, and spectral angle dependence 1 and spectral angle dependence 2 were evaluated according to the following standards.

-Spectral angle dependence 1-

A: intensity of transmitted light scattered in a direction of 10 degrees from the normal direction was 95% or more of the intensity of the transmitted light in the normal direction.
B: intensity of transmitted light scattered in a direction of 10 degrees from the normal direction was 90% or more and less than 95% of the intensity of the transmitted light in the normal direction.
C: intensity of transmitted light scattered in a direction of 10 degrees from the normal direction was 85% or more and less than 90% of the intensity of the transmitted light in the normal direction.
D: intensity of transmitted light scattered in a direction of 10 degrees from the normal direction was less than 85% of the intensity of the transmitted light in the normal direction.

-Spectral angle dependence 2-

A: intensity of transmitted light scattered in a direction of 50 degrees from the normal direction was 55% or more of the intensity of the transmitted light in the normal direction.
B: intensity of transmitted light scattered in a direction of 50 degrees from the normal direction was 50% or more and less than 55% of the intensity of the transmitted light in the normal direction.
C: intensity of transmitted light scattered in a direction of 50 degrees from the normal direction was 45% or more and less than 50% of the intensity of the transmitted light in the normal direction.
D: intensity of transmitted light scattered in a direction of 50 degrees from the normal direction was less than 45% of the intensity of the transmitted light in the normal direction.

<Evaluation of wavelength dependence of spectroscopy>

Light was incident on the obtained film in the normal direction (direction perpendicular to the film surface), and using a spectrophotometer (U-4100 manufactured by Hitachi High-Tech Corporation.), a transmittance of light in a wavelength range of 400 to 940 nm, transmitted through the film in the normal direction, was measured. Thereafter, the absolute value ($\Delta$T) of a difference between the transmittance ($T_{940}$) of light having a wavelength of 940 nm and the transmittance ($T_{450}$) of light having a wavelength of 450 nm was calculated, and wavelength dependence of spectroscopy was evaluated according to the following standard.

$$\Delta T = |T_{940} - T_{450}|$$

A: ΔT was 10% or less.
B: ΔT was more than 10% and 13% or less.
C: ΔT was more than 13% and 15% or less.
D: ΔT was more than 15%.

[Table 3]

| | Example 1 | Example 2 | Example 3 | Example 4 | Example 5 | Example 6 |
|---|---|---|---|---|---|---|
| Used composition for forming film | Composition 1 | Composition 2 | Composition 3 | Composition 4 | Composition 5 | Composition 6 |
| Total interface distance $L_1$ (per 1 μm × 1 μm) | 3.56 μm | 4.26 μm | 4.28 μm | 4.01 μm | 3.68 μm | 3.83 μm |
| Average transmittance | A | A | A | A | A | A |
| Spectral angle dependence 1 | A | A | B | A | A | A |
| Spectral angle dependence 2 | A | A | B | A | A | A |
| Wavelength dependence of spectroscopy | A | A | B | A | A | A |

[Table 4]

| | Comparative Example 1 | Comparative Example 2 | Comparative Example 3 |
|---|---|---|---|
| Used composition for forming film | Composition cl | Composition c2 | Composition c3 |
| Total interface distance $L_1$ (per 1 μm × 1 μm) | 2.80 μm | 5.11 μm | 8.15 μm |
| Average transmittance | A | A | A |
| Spectral angle dependence 1 | C | D | D |
| Spectral angle dependence 2 | C | D | D |
| Wavelength dependence of spectroscopy | D | D | D |

As shown in the above tables, in Examples, the evaluation of the angle dependence of spectroscopy was excellent, and the incidence ray could be scattered and transmitted over a wider angle. In addition, the evaluation of the wavelength dependence was excellent, and the light scattering properties were high with respect to light having a wide wavelength range.

Explanation of References

1, 2: optical sensor

101: photoelectric conversion element

111 to 114: pixels

110: optical filter

121, 122: film

130: transparent support

## Claims

1. A film comprising:

   a phase A having a refractive index of 1.7 or more to light having a wavelength of 550 nm; and
   a phase B having a refractive index of 1.6 or less to light having a wavelength of 550 nm,
   wherein the phase A and the phase B form a phase-separated structure in the film, and
   in a cross section of the film in a thickness direction, a total length of a distance in an interface between the phase A and the phase B per 1 μm × 1 μm is 2.90 to 5.00 μm.

2. The film according to claim 1,
   wherein the phase-separated structure is a co-continuous phase structure or a sea-island structure.

3. The film according to claim 1 or 2,
   wherein at least one of the phase A or the phase B contains a resin.

4. The film according to any one of claims 1 to 3,
   wherein the phase A contains inorganic particles.

5. The film according to claim 4,
   wherein the inorganic particles include at least one selected from titanium oxide particles, strontium titanate particles, barium titanate particles, zinc oxide particles, magnesium oxide particles, zirconium oxide particles, aluminum oxide particles, aluminum hydroxide particles, barium sulfate particles, or zinc sulfide particles.

6. The film according to claim 4 or 5,
   wherein an average primary particle diameter of the inorganic particles is 130 nm or less.

7. The film according to any one of claims 4 to 6,

   wherein a surface of the inorganic particles contained in the phase A is surface-modified with a first resin, and
   the phase B contains a second resin different from the first resin and a cured substance derived from a polymerizable monomer.

8. The film according to any one of claims 1 to 7,
   wherein, in a case where light is incident on the film from a normal direction, an average transmittance of light in a wavelength range of 450 to 940 nm, transmitted in the normal direction, is 10% to 50%.

9. The film according to any one of claims 1 to 8,
   wherein, in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is 15% or less.

10. The film according to any one of claims 1 to 9,
    wherein, in a case where light is incident on the film from a normal direction, an intensity of light having a wavelength of 940 nm, which is transmitted through the film and is a transmitted light scattered in a direction of 10 degrees from the normal direction, is 90% or more of an intensity of a transmitted light in the normal direction, and an intensity of light having a wavelength of 940 nm, which is transmitted through the film and a transmitted light scattered in a

direction of 50 degrees from the normal direction, is 50% or more of the intensity of the transmitted light in the normal direction.

**11.** A film comprising:

inorganic particles; and
a resin,
wherein the following requirements 1 to 3 are satisfied,
requirement 1: in a case where light is incident on the film from a normal direction, an average transmittance of light in a wavelength range of 450 to 940 nm, transmitted in the normal direction, is 10% to 50%,
requirement 2: in a case where light is incident on the film from a normal direction, an absolute value of a difference between a transmittance of light having a wavelength of 940 nm, transmitted in the normal direction, and a transmittance of light having a wavelength of 450 nm, transmitted in the normal direction, is 15% or less,
requirement 3: in a case where light is incident on the film from a normal direction, an intensity of light having a wavelength of 940 nm, which is transmitted through the film and is a transmitted light scattered in a direction of 10 degrees from the normal direction, is 90% or more of an intensity of a transmitted light in the normal direction, and an intensity of light having a wavelength of 940 nm, which is transmitted through the film and is a transmitted light scattered in a direction of 50 degrees from the normal direction, is 50% or more of the intensity of the transmitted light in the normal direction.

**12.** The film according to any one of claims 1 to 11,
wherein a thickness of the film is 1 to 100 μm.

**13.** An optical sensor comprising:
the film according to any one of claims 1 to 12.

FIG. 1

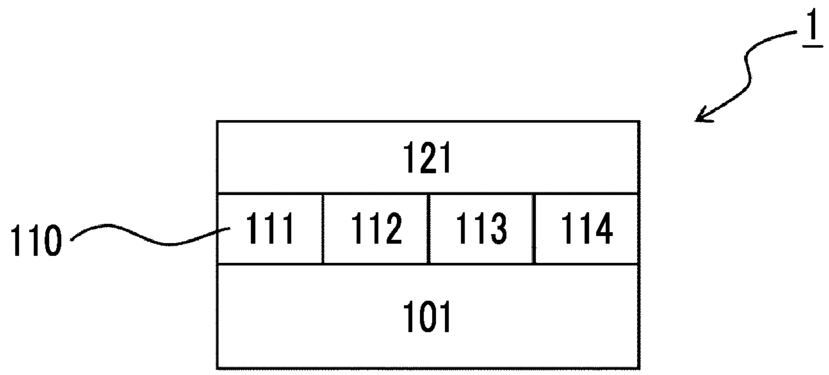


FIG. 2

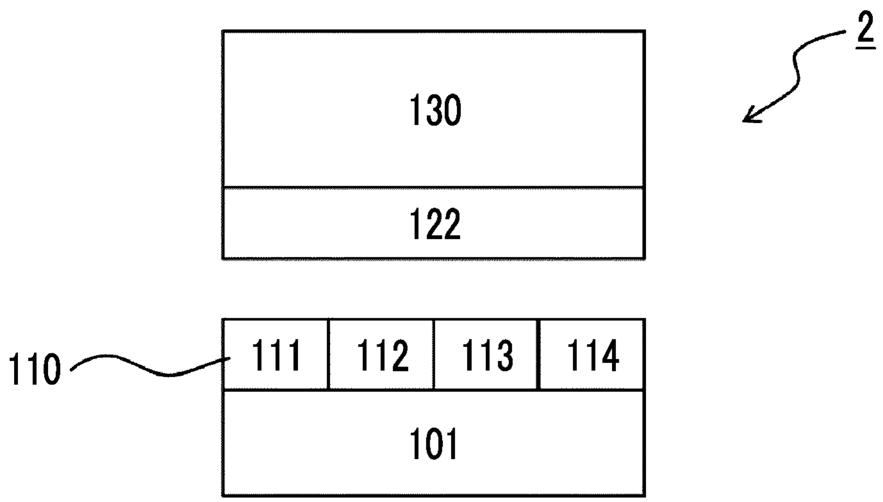

**INTERNATIONAL SEARCH REPORT**

International application No. **PCT/JP2022/011156**

**A. CLASSIFICATION OF SUBJECT MATTER**

***G02B 5/02***(2006.01)i; ***G01J 1/04***(2006.01)i
FI: G02B5/02 B; G01J1/04 B

According to International Patent Classification (IPC) or to both national classification and IPC

**B. FIELDS SEARCHED**

Minimum documentation searched (classification system followed by classification symbols)

G02B5/02; G01J1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/262270 A1 (FUJIFILM CORP) 30 December 2020 (2020-12-30) claims, paragraphs [0012]-[0046], [0066]-[0160], [0227]-[0237], [0250]-[0253], examples | 1-13 |
| Y | WO 2020/262271 A1 (FUJIFILM CORP) 30 December 2020 (2020-12-30) claims, paragraphs [0012]-[0016], [0037]-[0122], [0208]-[0215], [0228]-[0231], examples | 1-13 |
| Y | JP 2007-192861 A (NIPPON STEEL CHEM CO LTD) 02 August 2007 (2007-08-02) paragraphs [0021], [0033], example 2 | 1-13 |
| Y | JP 2013-107787 A (CANON INC) 06 June 2013 (2013-06-06) fig. 9 | 9, 11 |
| Y | JP 7-114013 A (SUMITOMO CHEMICAL CO) 02 May 1995 (1995-05-02) fig. 3 | 10-11 |
| A | JP 2012-83741 A (NITTO DENKO CORP) 26 April 2012 (2012-04-26) entire text, all drawings | 1-13 |
| A | JP 2002-221608 A (DAICEL CHEM IND LTD) 09 August 2002 (2002-08-09) entire text, all drawings | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/011156**

**C. DOCUMENTS CONSIDERED TO BE RELEVANT**

| Category* | Citation of document, with indication, where appropriate, of the relevant passages | Relevant to claim No. |
|---|---|---|
| P, A | WO 2021/199748 A1 (FUJIFILM CORP) 07 October 2021 (2021-10-07) entire text, all drawings | 1-13 |

Form PCT/ISA/210 (second sheet) (January 2015)

**INTERNATIONAL SEARCH REPORT**
**Information on patent family members**

International application No.
**PCT/JP2022/011156**

| Patent document cited in search report | Publication date (day/month/year) | Patent family member(s) | Publication date (day/month/year) |
|---|---|---|---|
| WO 2020/262270 A1 | 30 December 2020 | TW 202104284 A<br>KR 10-2022-0010539 A | |
| WO 2020/262271 A1 | 30 December 2020 | TW 202104407 A | |
| JP 2007-192861 A | 02 August 2007 | (Family: none) | |
| JP 2013-107787 A | 06 June 2013 | US 2014/0305166 A1<br>fig. 9<br>WO 2013/073106 A1 | |
| JP 7-114013 A | 02 May 1995 | (Family: none) | |
| JP 2012-83741 A | 26 April 2012 | US 2013/0300980 A1<br>entire text, all drawings<br>WO 2012/036271 A1<br>EP 2618184 A1<br>TW 201219849 A<br>CN 103109212 A<br>KR 10-2013-0041335 A | |
| JP 2002-221608 A | 09 August 2002 | US 2002/0154260 A1<br>entire text, all drawings | |
| WO 2021/199748 A1 | 07 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016161859 A
- JP 2015067794 A
- JP 2010168539 A
- JP 2013029760 A
- JP 2014177613 A
- JP 2013043962 A
- WO 2018163668 A
- JP 2012137564 A
- JP 2017194662 A
- JP 2009288705 A
- JP 2008292970 A
- JP 2013253224 A
- JP 2012208494 A
- JP 2017048367 A
- JP 6057891 B
- JP 6031807 B
- JP 48041708 B
- JP S48041708 B
- JP 51037193 A
- JP S51037193 A
- JP 2032293 B
- JP H02032293 B
- JP 2016765 B
- JP H02016765 B
- JP 58049860 B
- JP S58049860 B
- JP 56017654 B
- JP S56017654 B
- JP 62039417 B
- JP S62039417 B
- JP 62039418 B
- JP S62039418 B
- JP 63277653 A
- JP S63277653 A
- JP 63260909 A
- JP S63260909 A
- JP 1105238 A
- JP H01105238 A
- JP 2014130173 A
- JP 6301489 B
- WO 2018221177 A
- WO 2018110179 A
- JP 2019043864 A
- JP 2019044030 A
- JP 2019167313 A
- JP 2020055992 A
- JP 2013190459 A
- JP 2001233842 A
- JP 2000080068 A
- JP 2006342166 A
- JP 2000066385 A
- JP 2004534797 A
- JP 2017019766 A
- JP 6065596 B
- WO 2015152153 A
- WO 2017051680 A
- JP 2017198865 A
- WO 2017164127 A
- WO 2013167515 A
- JP 2012014052 A
- JP 2014137466 A
- JP 6636081 B
- KR 1020160109444 A
- WO 2013083505 A
- JP 2010262028 A
- JP 2014500852 A
- JP 2013164471 A
- JP 2013114249 A
- JP 4223071 B
- WO 2015036910 A
- WO 2019088055 A
- JP 2010527339 A
- JP 2011524436 A
- WO 2015004565 A
- JP 2016532675 A
- WO 2017033680 A
- JP 2013522445 A
- WO 2016034963 A
- JP 2017523465 A
- JP 2017167399 A
- JP 2017151342 A
- JP 6469669 B
- JP 2011221494 A
- WO 2015166779 A
- JP 2015034961 A
- JP 2009217221 A
- JP 2012208374 A
- JP 2013068814 A
- JP 2016162946 A
- JP 6268967 B
- WO 2016181987 A
- WO 2020137819 A
- JP 2009288703 A
- JP 2009242604 A
- JP 2014041318 A
- WO 2014017669 A
- JP 2011132503 A
- JP 2020008634 A

- JP 2016216602 A
- JP 2010032698 A
- JP 2010164965 A
- JP 2015117327 A
- WO 2020084854 A
- JP 2010106268 A
- US 20110124824 A
- JP 2009145395 A
- JP 2003262716 A
- JP 2003185831 A
- JP 2003261827 A
- JP 2012126830 A
- JP 2006169325 A
- KR 1020170122130 A
- JP 2013064993 A

**Non-patent literature cited in the description**

- **MANABU KIYONO.** Titanium Oxide - Physical Properties and Applied Technology. Gihodo Shuppan Co., Ltd, 25 June 1991, 13-45
- *MATERIAL STAGE,* 2019, vol. 19 (3), 37-60
- *J. C. S. Perkin II,* 1979, 1653-1660
- *J. C. S. Perkin II,* 1979, 156-162
- *Journal of Photopolymer Science and Technology,* 1995, 202-232
- *The Chemical Daily,* 13 November 2015
- *CHEMICAL ABSTRACTS,* 29598-76-3
- *CHEMICAL ABSTRACTS,* 10595-72-9
- *The Chemical Daily,* 01 February 2016
- *The Chemical Daily,* 22 February 2016
- *Nikkei Business Daily,* 23 February 2016
- Extension of Use of Ink Jet - Infinite Possibilities in Patent. S.B. Research Co., Ltd, February 2005